(19) Europäisches Patentamt

European Patent Office

Office européen des brevets

(11) **EP 1 235 126 B1**

(12) **EUROPEAN PATENT SPECIFICATION**

(45) Date of publication and mention
of the grant of the patent:
**27.09.2006 Bulletin 2006/39**

(51) Int Cl.:
***G05B 19/4103*** *(2006.01)*

(21) Application number: **01104714.9**

(22) Date of filing: **26.02.2001**

(54) **Numerically controlled curved surface machining unit**

Numerisches Steuerungssystem für gekrümmte Fläche

Commande numérique pour surface courbée

(84) Designated Contracting States:
**CH DE FR GB LI**

(43) Date of publication of application:
**28.08.2002 Bulletin 2002/35**

(73) Proprietors:
• **Hitachi, Ltd.**
**Chiyoda-ku,**
**Tokyo 101-8010 (JP)**
• **HITACHI SOFTWARE ENGINEERING CO., LTD.**
**Yokohama-shi,**
**Kanagawa-Ken (JP)**

(72) Inventors:
• **Hirai, Junichi**
**Hitachi-shi,**
**Ibaraki 317-0066 (JP)**
• **Arai, Hiroshi**
**Hitachiota-shi,**
**Ibaraki 313-0025 (JP)**
• **Harihara, Tamotsu**
**Fujisawa-shi,**
**Kanagawa 251-0001 (JP)**
• **Chiba, Osamu**
**Hitachinaka-shi,**
**Ibaraki 312-0063 (JP)**
• **Takahashi, Masaaki**
**Hitachi-shi,**
**Ibaraki 317-0076 (JP)**

• **Kanamaru, Nobuhisa**
**Hitachi-shi,**
**Ibaraki 317-0077 (JP)**

(74) Representative: **Strehl Schübel-Hopf & Partner**
**Maximilianstrasse 54**
**80538 München (DE)**

(56) References cited:
**EP-A- 0 706 103**        **GB-A- 2 341 243**
**US-A- 5 726 896**        **US-A- 5 808 263**
**US-A- 5 994 863**

• **PIEGL L: "ON NURBS: A SURVEY" , IEEE COMPUTER GRAPHICS AND APPLICATIONS, IEEE INC. NEW YORK, US, VOL. 11, NR. 1, PAGE (S) 55-71 XP000179582 ISSN: 0272-1716 * abstract ***

• **ANANTAKRISHNAN N ET AL: "INTEGER SUBDIVISION ALGORITHM FOR RENDERING NURBS CURVES" , VISUAL COMPUTER, SPRINGER, BERLIN, DE, VOL. 8, NR. 3, PAGE(S) 149-161 XP000561661 ISSN: 0178-2789 * abstract ***

• **PATENT ABSTRACTS OF JAPAN vol. 1997, no. 09, 30 September 1997 (1997-09-30) & JP 09 114512 A (TOCHIGI PREF GOV), 2 May 1997 (1997-05-02)**

**Description**

BACKGROUND OF THE INVENTION

FIELD OF UTILIZATION IN INDUSTRY

The present invention relates to a numerically controlled curved surface machining unit, particularly to such a unit that improves machining surface roughness and accuracy and enables to achieve high-speed machining.

DESCRIPTION OF PRIOR ART

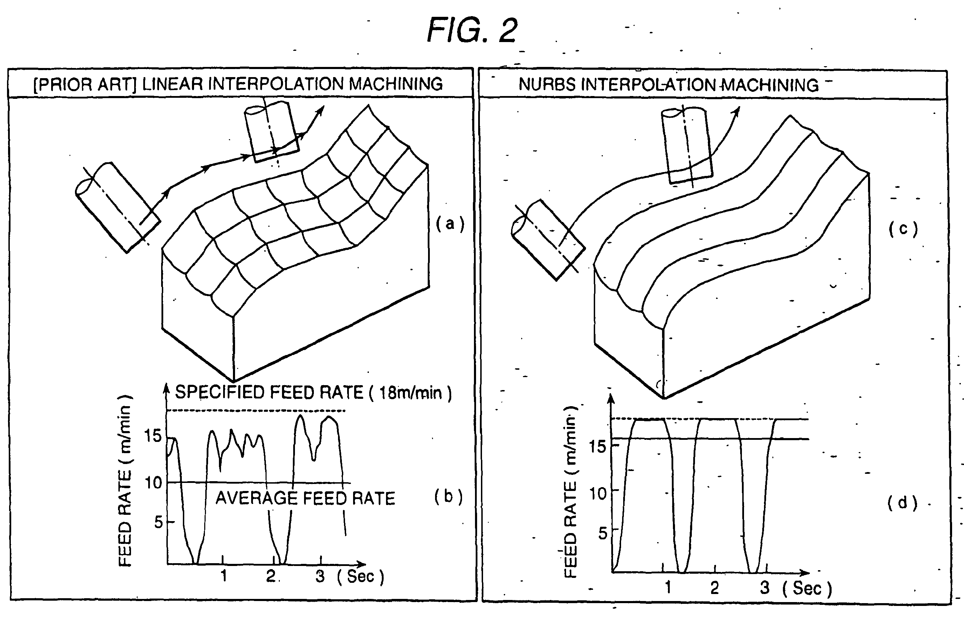

In the conventional numerically controlled (NC) curved surface machining, since a workpiece is machined by linear approximation as shown in Fig. 2(a), the machining surface roughness is poor and a lot of hand-finishing steps are needed. Besides, as shown in Fig. 2(b), since an average feed rate decreases as a result of acceleration or deceleration in positioning, long machining time is needed and, what is worse, there lies a problem that a vast amount of NC data at shorter pitches are required to improve the machining surface accuracy.

Japanese Application Patent Laid-Open Publication No. HEI 9-114512 (1997) proposes a method of curved surface machining by a NC machine tool for the purpose of improving machining surface accuracy and decreasing NC data volume. Even with this conventional method, however, there still lies a problem of poor machining surface roughness due to linear approximation and lower average feed rate due to acceleration or deceleration in positioning.

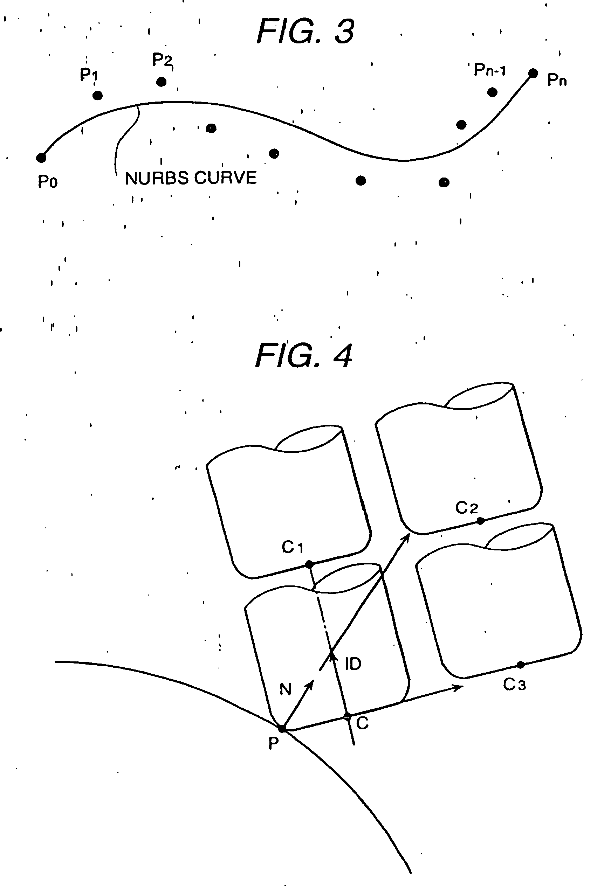

In order to solve these problems, interpolation by a NURBS curve as shown in Fig. 3 has been proposed. NURBS curve, which stands for Non-Uniform Rational B-Spline curve, is a kind of B-spline curve that is expressed by a rational expression wherein pitches of the nodal points constituting a curve are not uniform. It is a characteristic feature that the NURBS curve uses a rational expression in defining a curve while other curves use a polynomial.

By controlling these, a curve can be locally transformed without difficulty. Besides, it becomes possible to uniformly handle a cylinder, cone, sphere, hyperbola, ellipse, and parabola that cannot be expressed accurately by other curves.

In Fig. 3, the NURBS curve defines a curve by the control point Pi, weights wi, and knot vector xi; where k is degree, Pi is control point, wi is weights, xi is knot (xi ≤ xi+1), [x0, x1, ..., xm] (m=n+k) is knot vector, and t is spline parameter.

When a B-spline basis function N(t) is expressed by a de Boor-Cox recursive expression, Expressions 1 and 2 are obtained. The NURBS curve P(t) for interpolation results in Expression 3.

**Expression 1**

$$N_{i,1}(t) = \begin{cases} 1 \ (x_i \le t < x_{i+1}) \\ 0 \ (t < x_i, x_{i+1} \le t) \end{cases}$$

**Expression 2**

$$N_{i,k}(t) = \frac{(t - x_i) N_{i,k-1}(t)}{x_{i+k-1} - x_i} + \frac{(x_{i+k} - t) N_{i+1,k-1}(t)}{x_{i+k} - x_{i+1}}$$

Expression 3

$$P(t) = \frac{\sum\limits_{i=0}^{n} N_{i,k}(t)w_i P_i}{\sum\limits_{i=0}^{n} N_{i,k}(t)w_i}$$

$$(X_{k-1} \leq t \leq X_{m-k+1})$$

A NURBS interpolation instruction is outputted in the following format.

G05P10000; (high-accuracy continuous tool path control mode ON)

```
G06.2

[P_] K_X_Y_Z_α_β_[R_][F_];

K_X_Y_Z_α_β_[R_];

K_X_Y_Z_α_β_[R_];

K_X_Y_Z_α_β_[R_];

. . .

K_X_Y_Z_α_β_[R_];

K_;

. . .

K_;

G01 . . .

. . .
```

G05P0; (high-accuracy continuous tool path control mode OFF)

where;

G06.2: NURBS interpolation mode ON

P: Degree of NURBS curve

K_X_Y_Z_α_β: Control point (α, β: Rotary axis instruction)

R: Weighs

K : Knot

F: Feed rate

In the NURBS interpolation machining, since a curve can be smoothly machined as shown in Fig. 2(c), less hand-finishing steps are needed. In addition, since acceleration and deceleration in positioning becomes smooth and the average feed rate increases as shown in Fig. 2(d), machining time can be shortened and high-speed machining becomes possible. Further, it is said be advantageous that, since the control points for the NURBS interpolation can be set effectively, required NC data volume can be less.

With the conventional NURBS (non-uniform rational B-spline) interpolation method, simultaneous machining by three linear axes has been possible for the purpose of machining a mold. On pages 12-17 of "Machines and Tools" (February 1998 issue), under a title "High-Speed High-Accuracy Machining by NURBS Interpolation and Smooth Interpolation", a machining method with an enhanced function up to simultaneous 5-axis machining including two rotary axes is described for high-efficiency machining of a turbine blade, hydraulic turbine impeller, or the like.

On pages 8-9 of "Mold Engineering" (July 1998 issue), under a title of "Generation of High-Quality Machining Surface by Additional Axis NURBS Interpolation Machining", a machining method of a turbine blade by software using a simultaneous 5-axis NURBS interpolation function is described. Since the chord length between the knot vectors is uniform in this machining method, there lies a problem that less consideration is given to the control of a curve using the knot vector, which is a characteristic feature of a NURBS curve.

According to this prior art, the control points on a NURBS curve calculated on a workpiece coordinate system are transformed into a machine coordinate system in accordance with the tool axis vector, and the result is employed as the control points for 5-axis NURBS interpolation without any compensation and the same knot vector as used on a workpiece coordinate system is applied to the 5-axis NURBS interpolation.

Generally speaking, however, there is no guarantee of achieving a smooth curve even if the same knot vector is employed after the coordinate transformation. For this reason, wind or warp is likely to be caused on a machining surface.

In addition, this prior art handles ball end mill machining where the offset of a contact point between the tool control point and the curved surface is small, and does not handle radius end mill machining where the offset of a contact point between the tool control point and the curved surface is big. Because of this, there remains a high possibility that wind or warp is caused depending upon the extent of the offset.

## SUMMARY OF THE INVENTION

Under these circumstances, it has been desired to develop a method for calculating the knot vector and control point applicable to smooth machining of a curved surface by 5-axis NURBS interpolation using the NC data that is converted from a NURBS curve calculated on a workpiece coordinate system into a machine coordinate system in accordance with the inclination of the tool axis vector.

The objective of the present invention is to provide a numerically controlled curved surface machining unit which, by moving a tool smoothly along a NURBS curve, enables not only to improve the machining surface roughness and machining surface accuracy but to achieve high-speed machining so as to be able to eliminate hand finishing and reduce machining steps drastically.

In order to solve the above problems, the present invention proposes a numerically controlled curved surface machining unit equipped with three linear axes and, at least, one rotary axis, including a simultaneous multiple-axis control NC machine, which is numerically controlled by a numerical control unit (NC controller) with a numerical control NURBS (non-uniform rational B-spline) interpolation function; provided with a means for reading the tool control point vector data and tool axis vector data, calculated along the tool path on a workpiece coordinate system with defined curved shape by a host computer, as cutter location (CL) data and converting the CL data into a position vector of the three linear axes and a rotation angle on a machine coordinate system so as to operate the simultaneous multiple-axis control NC machine in accordance with the machine configuration of the NC machine; a means for calculating knot vectors of a NURBS curve with the most suitable chord length on the basis of a position vector of the three linear axes and a rotation angle calculated on a machine coordinate system; a means for calculating each NURBS curve of the three linear axes and one rotary axis using the knot vectors; a means for converting the NURBS curve into NURBS interpolation NC data; a means for converting the feed rate on the workpiece coordinate system into the feed rate per minute or feed rate per inverse time on the machine coordinate system; and a means for transmitting the obtained CL data to the NC controller.

The machining unit can be provided with a means for removing or inserting CL data along the tool path in accordance with the machining accuracy of the curved surface, upon reading data as CL data.

The machining unit can also be provided with a means for reading a compensation value based on individual difference of each tool from the NC controller, upon reading data as CL data, and compensating the read CL data in accordance with the tool compensation value.

The machining unit may be provided with a means for dividing a NURBS curve based on the curvature or pitch of the CL data plotted along the tool path direction.

The machining unit can also be provided with a means for calculating a NURBS curve using, as the knot vector, the chord length of the position vector of the three linear axes plotted along the tool path direction on a machine coordinate system.

It is also possible that the machining unit is provided with a means for calculating a NURBS curve using, as the knot vector, the chord length obtained by multiplying by a coefficient each chord length of the position vector of the three linear axes plotted along the tool path direction on a machine coordinate system, and chord length of the tool control point vector on a workpiece coordinate system and adding up the products.

The machining unit may be provided with a means for transforming a curve into NURBS interpolation in case that the position vector of the three linear axes and the rotation angle of the rotary axis calculated on a machine coordinate system are defined by a curve formed by any of B-spline interpolation, Bezier interpolation, Coons interpolation, polynomial, or a combination of a line and an arc.

It is desired that the machining unit is provided with a means for generating a NURBS curve or multiple NURBS curves with continuous curvature by modifying or inserting a NURBS curve(s) so that the curvature at a break point of multiple NURBS curves continuously changes within a range of machining accuracy.

The machining unit can be provided with a means for setting the tool axis vector of CL data to a specific value and converting the data into NURBS interpolation NC data for simultaneous 3-axis control NC machine equipped only with three linear axes.

The machining unit may be provided with a means for obtaining the CL data for machining a workpiece along a screw-and-spiral or single-stroke path.

It is also possible that the machining unit is provided with a means for reading the linear interpolation NC data for simultaneous multiple-axis machine and converting the data into CL data

The machining unit may sometimes be provided with a means for specifying the CL data that must be covered by machining without fail.

In order to solve the above problems, the present invention also proposes a numerically controlled curved surface machining unit equipped with three linear axes and, at least, one rotary axis, including a simultaneous multiple-axis control NC machine, which is numerically controlled by a numerical control unit (NC controller) with a numerical control NURBS (non-uniform rational B-spline) interpolation function; provided with a means for reading a NURBS curve of three linear axes and a rotary axis calculated on a machine coordinate system; a means for reading cutter location (CL) data calculated on a workplace-coordinate system; a means for calculating a NURBS curve from the tool control point center position vector of the CL data; a means for calculating a NURBS curve from the tool axis vector of the CL data; a means for calculating each sequence-of-point data to a specified machining accuracy from the NURBS curve of three linear axes and a rotary axis on a machine coordinate system; a means for converting the sequence-of-point data on a machine coordinate system into the CL data on a workpiece coordinate system; and a means for calculating each error between the CL data converted into a workpiece coordinate system and a NURBS curve of the tool control point vector and also a NURBS curve of the tool axis vector calculated on a workpiece coordinate system.

The machining unit can be provided with a means for modifying the control point or knot vector or weights of the NURBS curve on a machine coordinate system based on the calculation result of the error.

It is also possible that the machining unit is provided with a means for reading a tool compensation value from the NC machine and converting the CL data calculated on a workpiece coordinate system in accordance with the compensation value.

BRIEF DESCRIPTION OF DRAWINGS

Fig. 1 is a block diagram showing the system configuration of an embodiment of a numerically controlled curved surface machining unit according to the present invention;

Fig. 2 is a diagram showing comparison of conventional linear interpolation machining and conventional NURBS interpolation machining;

Fig. 3 is a diagram showing the relationship between NURBS curve and control points;

Fig. 4 is a diagram showing an example of way of compensating CL data;

Fig. 5 is a diagram showing a way of removing or adding CL data according to the present invention;

Fig. 6 is a diagram showing a way of dividing a NURBS curve according to the present invention;

Fig. 7 is a diagram showing the relationship between coordinate systems upon transformation from a machine coordinate system into a workpiece coordinate system according to the present invention;

Fig. 8 is a diagram showing a way of calculating a knot vector and a NURBS curve on a machine coordinate system according to the present invention;

Fig. 9 is a diagram showing a way of smoothing a NURBS curve by setting a blending factor according to the present invention;

Fig. 10 is a diagram showing a way of forming a single continuous curve by inserting a fillet curve with R according to the present invention;

Fig. 11 is a diagram showing a way of achieving the continuity of radius of curvature by modifying a machining shape according to the present invention;

Fig. 12 is a diagram showing a way of continuous machining by changing a connection of tool paths into a smooth curve according to the present invention;

Fig. 13 is a diagram showing a way of forming a single continuous curve by changing a tool path into a screw and spiral curve according to the present invention;

Fig. 14 is a diagram showing a way of transforming other interpolation into NURBS interpolation according to the present invention;

Fig. 15 is a diagram showing the relationship between coordinate systems upon transformation from a machine coordinate system into a workpiece coordinate system (inverse transformation) according to the present invention;

Fig. 16 is a diagram showing a way of evaluating a NURBS curve on a machine coordinate system according to the present invention;

Fig. 17 is a diagram showing a say of modifying a NURBS curve according to the present invention;

Fig. 18 is a block diagram showing the system configuration of another embodiment of a numerically controlled curved surface machining unit according to the present invention;

Fig. 19 is a diagram showing how to define a knot vector in the NURBS curve interpolation of feed rate;

Fig. 20 is a diagram showing the relationship between NURBS curve on a machine coordinate system and control points thereof; and

Fig. 21 is a diagram showing the optimization of feed rate on a machine coordinate system using a blending factor.

DESCRIPTION OF PREFERRED EMBODIMENTS OF THE INVENTION

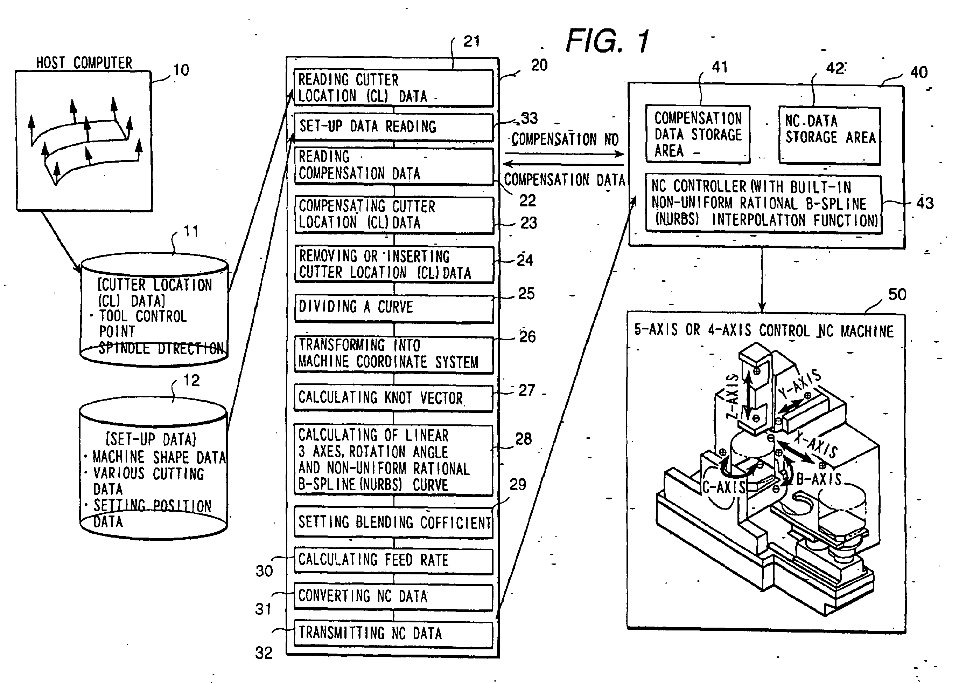

Preferred embodiments of a numerically controlled curved surface machining unit according to the present invention are described hereunder, using Fig. 1 through Fig. 17.

Fig. 1 is a block diagram showing the whole configuration of an embodiment of the numerically controlled curved surface machining unit according to the present invention. A host computer 10 stores the tool control point vector and tool axis vector calculated along the tool path on a coordinate system with defined curved shape (workpiece coordinate system) in an external file 11 as cutter location (CL) data.

In step 21, a computer 20 of the numerically controlled curved surface machining unit reads CL data from the external file 11. In step 33, the computer reads set-up data necessary for NC data conversion, including machine shape data, cutting specification data, setting position data, from an external file 12.

There is always an error between the supposed tool length or tool diameter in preparation of NC data and the actual tool length or tool diameter.

In step 22, in order to compensate the above error, the computer 20 specifies a tool compensation No. and requests a NC controller 40 to output compensation data. The NC controller 40 reads the compensation date, corresponding to the specified compensation No., from a compensation data storage area 41 and outputs the data to the computer 20. The computer 20 reads the compensation data outputted from the NC controller 40.

In step 23, the computer 20 compensates the CL data along a desired direction by a method shown in Fig. 4 and by Expression 4. In the expression, C is the tool control point vector, D is the tool axis vector, P is the tool contact point vector on C, and N is the normal vector on P. C1 is a tool control point vector compensated by d1 along the spindle direction, C2 by d2 along the normal direction, and C3 by d3 along the tool diameter direction.

**Expression 4**

$$C_1 = C + d_1 D$$
$$C_2 = C + d_2 N$$
$$C_3 = C + \frac{D \times N \times D}{|D \times N \times D|} d_3$$

Since CL data normally means the tool control point vector and the tool axis vector, compensation of C1 only is possible. If the tool contact point vector and normal vector used for the calculation of the CL data are known, compensation of the above C2 and C3 or compensation of a combination of C1, C2 and C3 is possible. Compensating the CL data by this method makes it possible to generate compensated NC data for NURBS (non-uniform rational B-spline) interpolation.

In the NURBS interpolation function according to "High-Speed High-Accuracy Machining by NURBS Interpolation and Smooth Interpolation" of the afore-mentioned "Machines and Tools", no compensation is permitted.

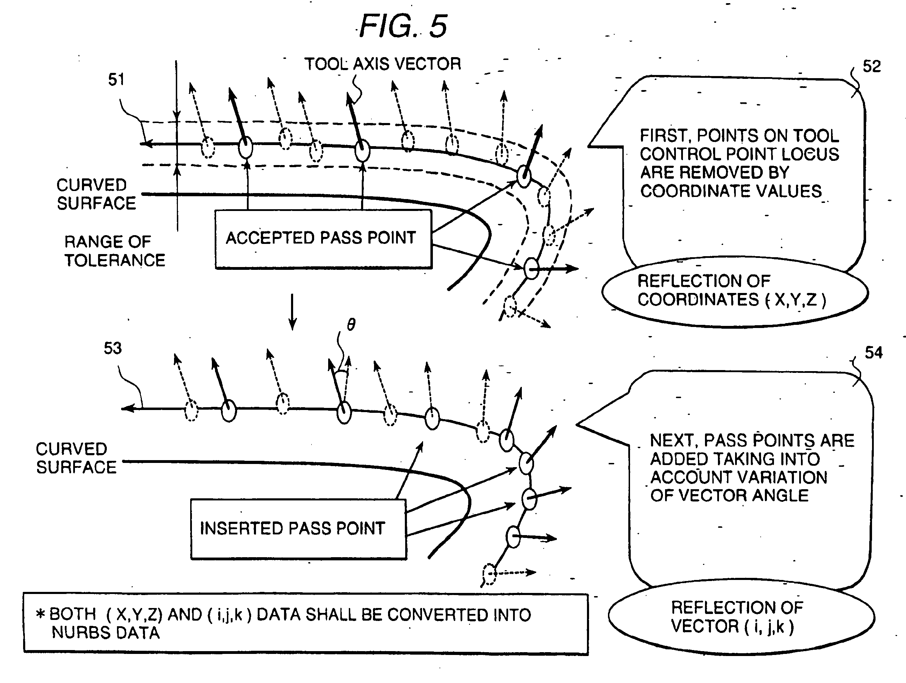

In step 24, CL data is removed or inserted by a method shown in Fig. 5 in order to improve the machining accuracy and also to reduce the data volume. First, a passing curve is calculated from the tool control point vector by least squares curve approximation to find a NURBS curve 51. Then, in step 52, CL data is removed by removing data items not within a range of specific tolerance.

A NURBS curve is determined by the definition of NURBS curve shown in Fig. 3 and by Expressions 1, 2 and 3. A method for generating a NURBS curve from sequence of points is described in, for example, "The NURBS Book" by Les Piegl and Wayne Tiller.

Then, a NURBS curve 53 is calculated based on the tool axis vector of the removed CL data. In step 54, the tool axis vector on the NURBS curve 53 corresponding to the pass points of the tool control point vector is calculated and the variation of angle is calculated. If the difference from the original CL data is greater than the tolerance, a pass point is inserted so as to improve the accuracy. The tolerance for removing or inserting CL data is set to 0.01 mm.

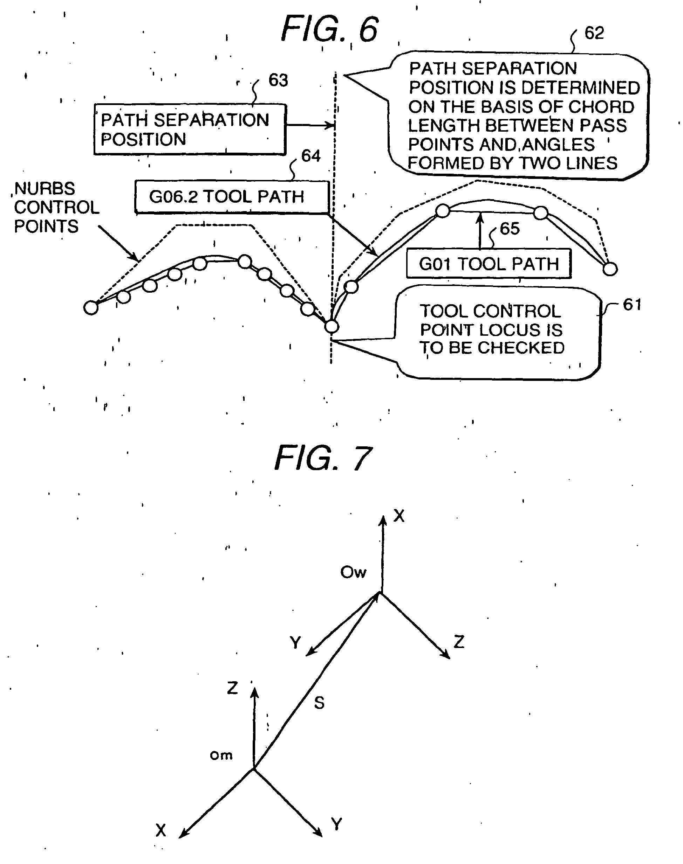

In step 25, the NURBS curve 53 calculated in step 24 is divided. Fig. 6 shows the locus of the tool control point vector. From the NURBS curve of the tool control point vector (i.e., G06.2 tool path 64) and the linear tool path (i.e., G01 tool path 65), a path dividing position 63 is found. If the chord length between the pass points becomes-shorter suddenly or the angle formed by two lines changes sharply, turbulence is caused on the NURBS curve. Accordingly, a position where the chord length becomes too short or the angle formed by two lines changes sharply is found out and regarded as a path dividing position 63 of the curve, and then the curve is divided at the path dividing position 63 so as to improve the accuracy of the curve.

In step 26, CL data is converted into a machine coordinate system. On a table 2-axis type 5-axis machine 50 in Fig. 1, a node at which the C-axis table rotation center and the B-axis table rotation center intersect with each other at right angle is the origin Om on the machine coordinate system. A workpiece is set on the C-axis table and the origin on the workpiece coordinate system is assumed to be at Ow. Assuming that, viewing from the origin Om on the machine coordinate system, S is the position vector of the origin Ow on the workpiece coordinate system, the transformation of the tool control point vector (X, Y, Z) and tool axis vector (I, J, K) on the workpiece coordinate system into the machine coordinate system (Mx, My, Mz, B, C) can be expressed by the coordinate system in Fig. 7 and Expressions 5, 6, 7, 8 and 9.

**Expression 5**

$$W = (X, Y, Z)$$

$$D = (I, J, K)$$

$$Wa = (Y, Z, X)$$

$$Da = (J, K, I) = (Dai, Daj, Dak)$$

$$S = (Xs, Ys, Zs)$$

$$Ws = Wa + S = (Wax, Way, Waz)$$

**Expression 6**

$$C = \tan^{-1}(Daj / Dai)$$

$$B = \tan(\sqrt{Dai^{**}2 + Daj^{**}2} / Dak)$$

**Expression 7**

$$Mc = \begin{bmatrix} \cos(-C) & -\sin(-C) & 0 \\ \sin(-C) & \cos(-C) & 0 \\ 0 & 0 & 1 \end{bmatrix}$$

$$Mb = \begin{bmatrix} \cos(-B) & 0 & \sin(-B) \\ 0 & 1 & 0 \\ -\sin(-B) & 0 & \cos(-B) \end{bmatrix}$$

**Expression 8**

$$\begin{bmatrix} Mx \\ My \\ Mz \end{bmatrix} = MbMc \begin{bmatrix} Wax \\ Way \\ Waz \end{bmatrix}$$

**Expression 9**

$$M = (Mx,\ My,\ Mz,\ B,\ C)$$

In the above expressions, (Mx, My, Mz, B, C) represents the coordinate of each machine axis X, Y, Z, B, and C. The coordinate transformation expression is unique to each machine. This transformation is applicable also to a table 1-axis, table 1-axis type, and spindle 2-axis type machine.

According to a prior art, the control points on a NURBS curve calculated on a workpiece coordinate system are transformed into a machine coordinate system in accordance with the tool axis vector, and the result is employed as the control points for 5-axis NURBS interpolation without any compensation and the same knot vector as used on a workpiece coordinate system is applied to the 5-axis NURBS interpolation.

Generally speaking, however, there is no guarantee of achieving a smooth curve even if the same knot vector is employed after the coordinate transformation. For this reason, wind or warp is likely to be caused on a machining surface.

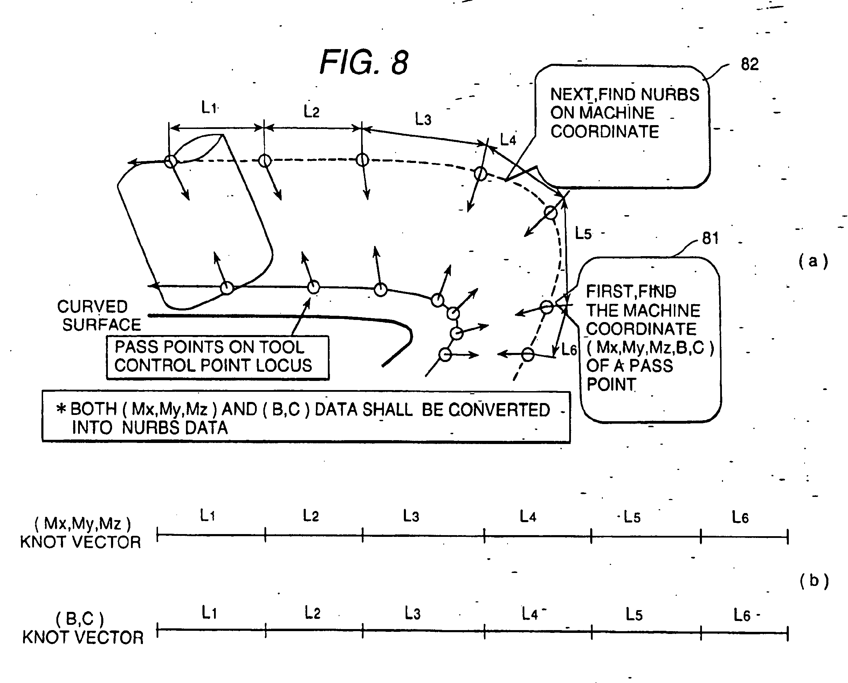

On the contrary, in the present invention, the chord length between each machine coordinate is used as the knot vector as shown in Fig. 8(b) and the control points on each NURBS curve of the three linear axes (Mx, My, Mz) and two rotary axes (B, C) are calculated again so that each curve changes continuously and smoothly. Thus, the machining accuracy is improved.

In step 27, the knot vector is calculated. In step 81 of Fig. 8, the machine coordinate (Mx, My, Mz, B, C) of all pass points is first calculated using the above Expressions 5, 6, 7, 8 and 9. The chord length (Li) between each machine coordinate is calculated to obtain the knot vector as shown in Fig. 8(b). The same knot vector is used for (Mx, My, Mz) and for (B, C).

In step 28, from the sequence-of-point data of the three linear axes (Mx, My, Mz) and two rotary axes (B, C) transformed into a machine coordinate system from the CL data on a workpiece coordinate system and the knot vector calculated in step 27, a NURBS curve shown by Expressions 1, 2 and 3 is generated according to a NURBS curve generating method described in, for example, the afore-mentioned "The NURBS Book".

In step 28, using the knot vector in Fig. 8(b) and the definition of NURBS curve shown in Fig. 3 and by Expressions 1, 2 and 3, each NURBS curve of the three linear axes (Mx, My, Mz) and two rotary axes (B, C) is calculated.

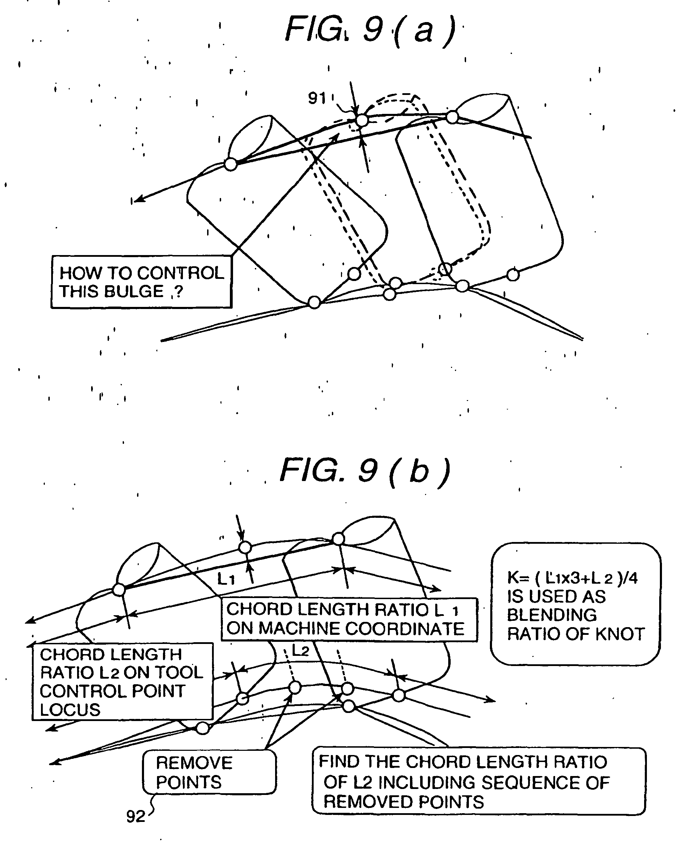

In step 29, a blending factor is calculated. If a workpiece is machined according to the NURBS curve calculated in step bulge can be caused on the curve as shown in Fig. 9 and accordingly irregularity may be caused on the machined surface. In order to prevent this, first, the chord length of the tool control point vector on a workpiece coordinate system is calculated to higher accuracy as shown in Fig. 9(b), including the removed points 92 removed in step 24, to obtain the knot vector on a workpiece coordinate system. Then, a knot vector is obtained by multiplying each knot vector on a machine coordinate system and knot vector on a workpiece coordinate system by the blending factor and adding up the products, and it is used as the knot vector on a machine coordinate system.

Irregularity on the machined surface can be eliminated as a result of the above. In this embodiment, smooth machining can be achieved by setting the blending factor to 3:1. This factor can be modified for different workpiece.

In step 30, the feed rate on the machine coordinate system is calculated. Provided that the start point on the workpiece coordinate system is (Xws, Yws, Zws), end point (Xwe, Ywe, Zwe), chord length Lw, and feed rate Fw and that the start point on the machine coordinate system is (Xms, Yms, Zms, Bms, Cms), end point (Xme, Yme, Zme, Bme, Cme), chord length Lm, and feed rate Fm, the feed rate Fm on the machine coordinate system is obtained from Expression 10.

**Expression 10**

$$Lw = \sqrt{(Xwe - Xws)^{**}2 + (Ywe - Yws)^{**}2 + (Zwe - Zws)^{**}2}$$

$$Lm = \sqrt{(Xme - Xms)^{**}2 + (Yme - Yms)^{**}2 + (Zme - Zms)^{**}2 + (Bme - Bms)^{**}2 + (Cme - Cms)^{**}2}$$

$$Fm = Fw^{*}Lm \ / \ Lw$$

There is another method where the feed rate is specified by inverse time (feed per inverse time). When this applies, the feed rate Fm on the machine coordinate system is obtained from Expression 11.

**Expression 11**

$$Fm = Fw/Lm$$

In step 31, by substituting the control points on the NURBS curve of the three linear axes on the machine coordinate system calculated in steps 28, 29 and 30 for X, Y and Z of the NURBS interpolation instruction in Fig. 3, control points on the NURBS curve of the two rotary axes for $\alpha$ and $\beta$, knot vector for K, weights for R, and the feed rate Fm for F, data is converted into CL data according to the format of the NURBS interpolation instruction in Fig. 3

In step 32, the last converted NC data is transmitted as NC data from the computer 20, and is read and stored into the NC data storage area 42 of the NC controller 40.

A NC control mechanism 43, equipped with a built-in NURBS interpolation function of the NC controller 40, reads NC data from the NC data storage area 42 and, while analyzing the data, controls a 5-axis or 4-axis control NC machine and achieves NC machining. If a communication line is employed for data input from the external files 11 and 12 to the computer 20 and data input/output between the computer 20 and the NC controller 40, the computer 20 can be realized as a computer located at a consulting firm.

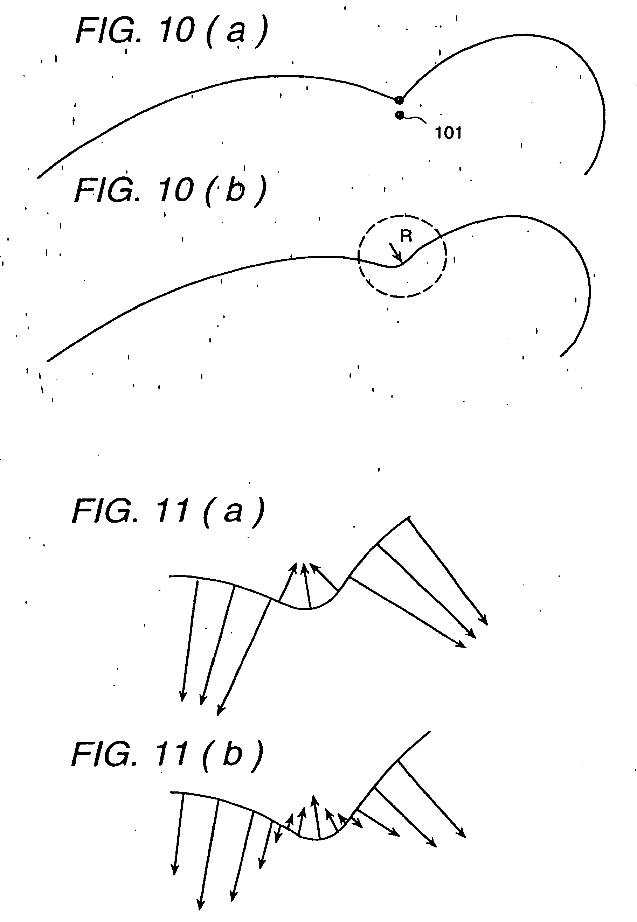

An embodiment of a method for generating one NURBS curve from multiple NURBS curves is explained hereunder. Fig. 10(a) shows two NURBS curves connected at a break point 101. By inserting a fillet curve of a small R within a range of machining accuracy to the two NURBS curves in the neighborhood of the break point 101, a continuous NURBS curve can be generated.

Fig. 11(a) is an enlarged view of a portion enclosed by a dotted line in Fig. 10(b). An arrow represents the radius of curvature. In Fig. 11(a), it is noted that the radius of curvature is not continuous particularly at the break point of the fillet curve. In this case the radius of curvature can be changed continuously by transforming the curve so that the curvature becomes continuous within a range of machining accuracy as shown in Fig. 11(b). Since the speed of the NC controller 40 decreases at the end point of the NURBS interpolation, a concavity is caused on the curve. The above transformation of the NURBS curve is effective to prevent this concavity.

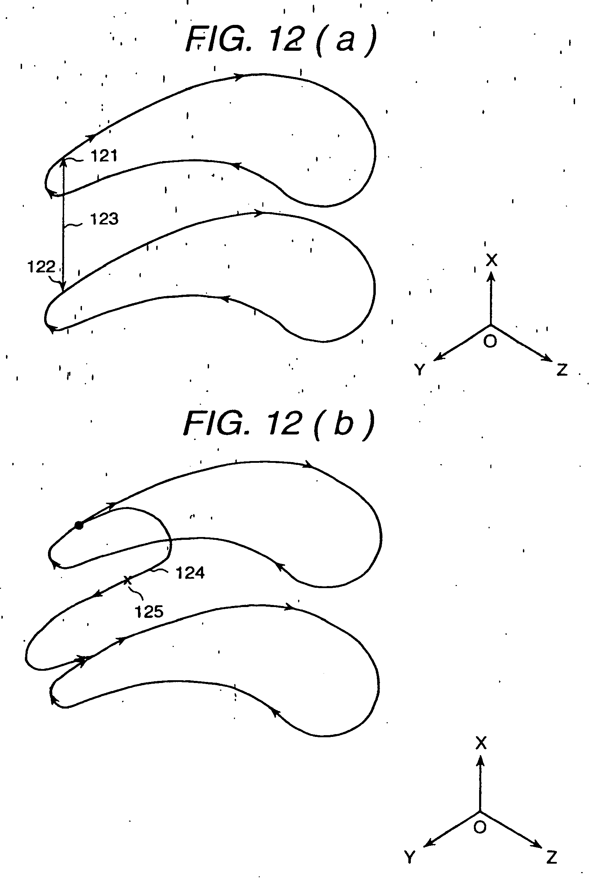

There can be a case where the connection of NURBS curves for machining is made of a line between a start point 121 and an end point 122 as shown in Fig. 12(a). In this case, since the start point 121 and the NURBS curve are not continuous, a concavity may be caused in machining if the tool path passes through a curve 123.

In the present invention, in order to prevent this concavity, the tool path is once retracted along the tangential direction of the NURBS curve at the start point 121, passed through an intermediate pass point 125 that does not interfere with the machining surface, and then changed to a NURBS curve 124 that approaches along the tangential direction at the end point 122. In this manner, a NURBS curve capable of continuous machining can be calculated.

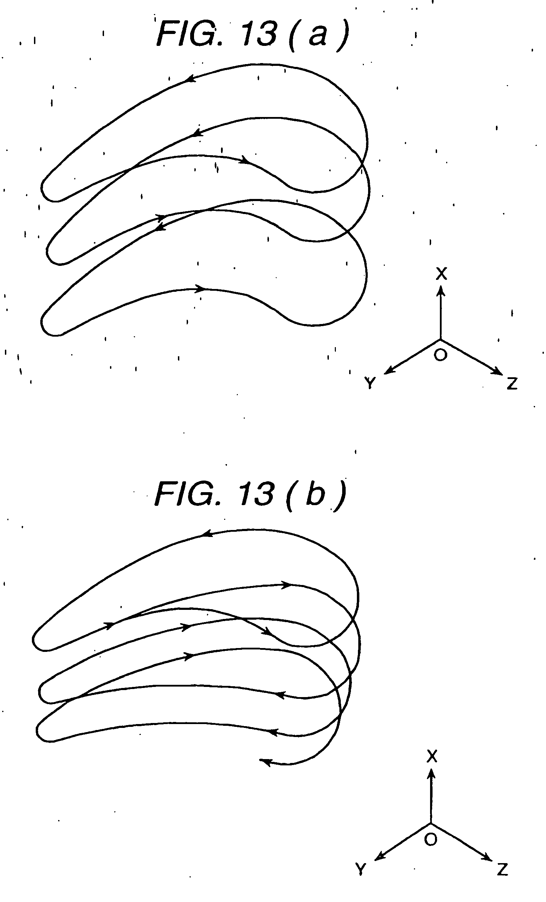

Since changing from machining along multiple closed curves shown in Fig. 13(a) to machining along a continuous screw-and-spiral curve shown in Fig. 13(b) enables to machine along a continuous single NURBS curve, both working efficiency and machining accuracy are improved.

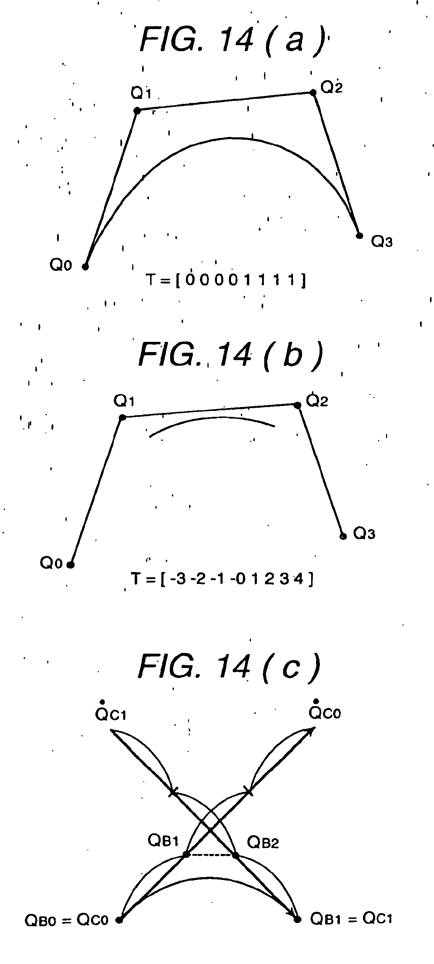

When a position vector of three linear axes and a rotation angle calculated on a machine coordinate system are defined by either a B-spline interpolation or a Bezier interpolation curve, Fig. 14(a) and Expression 12 show the transformation into NURBS interpolation by Bezier interpolation, and Fig. 14(b) and Expression 13 show the transformation into NURBS interpolation by B-spline interpolation; where, Qi is a control point, T is a knot vector, and Ni, 4(t) is a basis function. When the above is defined by a Coons interpolation curve, Fig. 14(c) and Expression 14 can be transformed into Bezier interpolation. It therefore is possible to transform into a NURBS interpolation expression using the Fig. 14(a) and Expression; where, Qb is a control point for Bezier interpolation and Qc is a vector for constituting Coons interpolation. When the above is defined by a polynomial, NURBS interpolation becomes available by generating series of points and transforming them into a NURBS curve or by converting the polynomial directly into a NURBS interpolation expression. When the above is defined by a combination of an arc and a line, NURBS interpolation is available because each NURBS transformation expression for an arc and a line is known.

**Expression 12**

$$T = \begin{bmatrix} t_0 t_1 t_2 t_3 t_4 t_5 t_6 t_7 \end{bmatrix}$$
$$= \begin{bmatrix} 0\ 0\ 0\ 0\ 1\ 1\ 1\ 1 \end{bmatrix}$$
$$N_{0,4}(t) = (1 - t)^3$$
$$N_{1,4}(t) = 3(1 - t)^2 t$$
$$N_{2,4}(t) = 3(1 - t)t^2$$
$$N_{3,4}(t) = t^3$$
$$(0 \le t \le 1)$$

**Expression 13**

$$T = \begin{bmatrix} t_0\ t_1\ t_2\ t_3\ t_4\ t_5\ t_6\ t_7 \end{bmatrix}$$
$$= \begin{bmatrix} -3\ -2\ -1\ 0\ 1\ 2\ 3\ 4 \end{bmatrix}$$

Expression of curve : $P(t) = N_{0,4}(t)Q_0 + N_{1,4}(t)Q_1 + N_{2,4}(t)Q_2 + N_{3,4}(t)Q_3$

$$N_{0,4}(t) = \frac{1}{6}(1 - t)^3$$
$$N_{1,4}(t) = \frac{1}{2}t^3 - t^2 + \frac{2}{3}$$
$$N_{2,4}(t) = -\frac{1}{2}t^3 + \frac{1}{2}t^2 + \frac{1}{2}t + \frac{1}{6}$$
$$N_{3,4}(t) = \frac{1}{6}t^3$$
$$(0 \le t \le 1)$$

**Expression 14**

$$Q_{c0} = Q_{B0}$$

$$Q_{c1} = Q_{B3}$$

$$Q_{c0} = -3Q_{B0} + 3Q_{B1} = 3(Q_{B1} - Q_{B0})$$

$$Q_{c1} = -3Q_{B2} + 3Q_{B3} = 3(Q_{B3} - Q_{B2})$$

If the tool axis vector of CL data is set to a fixed value, the rotation angle on a machine coordinate system becomes a fixed value. Accordingly, use of a numerically controlled curved surface machining unit of the present invention enables to generate NURBS interpolation NC data for simultaneous three-axis control NC machine equipped only with three linear axes.

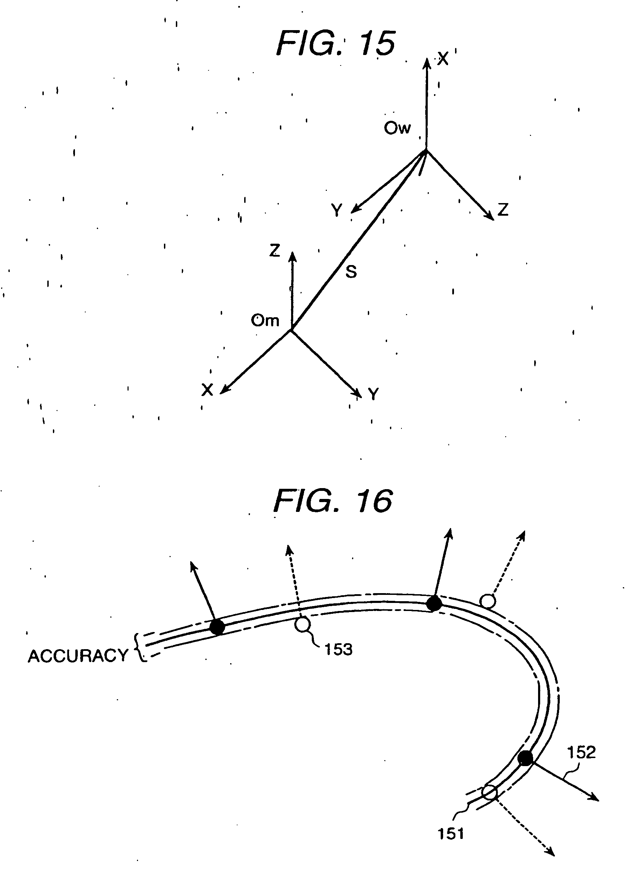

Next, checking and modifying the precision of a NURBS curve on a machine coordinate system are described hereunder. Transformation from a machine coordinate system into a workpiece coordinate system is an inverse of Fig. 7 and calculated by Expressions 15, 16, 17, 18 and 19 as shown in Fig. 15. Symbols used in these expressions are the same as in Fig. 7.

**Expression 15**

$$M = (Mx, My, Mz, B, C)$$

**Expression 16**

$$Mc = \begin{bmatrix} \cos(C) & -\sin(C) & 0 \\ \sin(C) & \cos(C) & 0 \\ 0 & 0 & 1 \end{bmatrix}$$

$$Mb = \begin{bmatrix} \cos(B) & 0 & \sin(B) \\ 0 & 1 & 0 \\ -\sin(B) & 0 & \cos(B) \end{bmatrix}$$

**Expression 17**

$$\begin{bmatrix} Wax \\ Way \\ Waz \end{bmatrix} = Mc\,Mb \begin{bmatrix} Mx \\ My \\ Mz \end{bmatrix}$$

**Expression 18**

$$Dak = sin(B)$$

$$Daj = cos(B) \cdot sin(C)$$

$$Dai = cos(B) \ cos(C)$$

**Expression 19**

$$Da = (J, K, I) = (Dai, Daj, Dak)$$

$$S = (Xs, Ys, Zs)$$

$$Wa = (Wax, Way, Waz) - S = (Y, Z, X)$$

$$W = (X, Y, Z)$$

$$D = (I, J, K)$$

A sequence-of-point data is calculated from a NURBS curve of the three linear axes and rotation angle calculated on a machine coordinate system. The calculated sequence-of-point data is converted into CL data on a workpiece coordinate system using the coordinate system in Fig. 15 and Expressions 15, 16, 17, 18 and 19. The converted CL data is then compensated along an inverse direction to that in Fig. 4 so as to calculate CL date before compensation.

Using the CL data 11 on the coordinate system as inputted in Fig. 1, a NURBS curve 151 expressed by Expressions 1, 2 and 3 and a tool axis vector 152 on each point as shown in Fig. 16 are calculated by a NURBS curve generating method described in, for example, "The NURBS Book". Then, the compensated NURBS data is compared with the NURBS curve 151 and tool axis vector 152 so as to check the accuracy.

It will be a practical way for the comparison to calculate errors on a computer and visually display them on a display or a plotter. That is, sequence of CL data points converted from a machine coordinate system are superposed on the curve so as to check the accuracy.

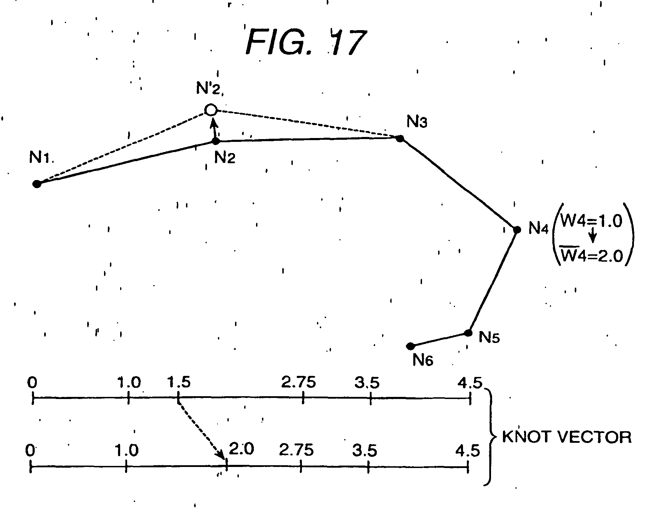

Fig. 17 shows how to modify a curve if a point 153, for example, falls outside a required accuracy. In the figure, the control point Wi of the NURBS curve represent weights. There are three ways of modification are available: changing the control point N2 to N2', modifying Wi, or modifying the chord length between knot vectors.

Next, reading linear interpolation NC data for a simultaneous 4-axis or 5-axis control machine and converting the data into NURBS interpolation NC data are described hereunder. Linear interpolation NC data is read and unnecessary codes are removed from the NC data, and then three linear axes and one or two rotary axes on a machine coordinate system are calculated.

Using the coordinate system on Fig. 15 and Expressions 15, 16, 17, 18 and 19, the date on a machine coordinate is converted into CL data on a workpiece coordinate system, and then stored in the CL data file 11 shown in Fig. 1. Using this data, it becomes possible to calculate NURBS interpolation NC data on a curved surface machining unit of the present invention shown in Fig. 1.

In order to improve the machining accuracy of a shape, there can be a situation where the tool path is required to pass through a certain point, range or line without fail. In this situation, curved surface machining in an improved shape becomes possible by increasing pass points, for example, by specifying additional pass points to those accepted in Fig. 5.

According to a numerically controlled curved surface machining unit of the present invention, it is possible to move a tool smoothly along a NURBS (non-uniform rational B-spline) curve and machine a workpiece. Hence, it becomes possible to improve the machining surface roughness and machining surface accuracy, eliminate hand finishing, and reduce machining steps drastically. In addition, since NC data volume can be reduced, it becomes possible to prevent the reduction of average feed rate to be caused by a servo mechanism and achieve high-speed machining. Besides, it is also possible in the present invention to make a fine adjustment in consideration of possible deformation of a shape.

Next, another embodiment of the present invention is explained hereunder.

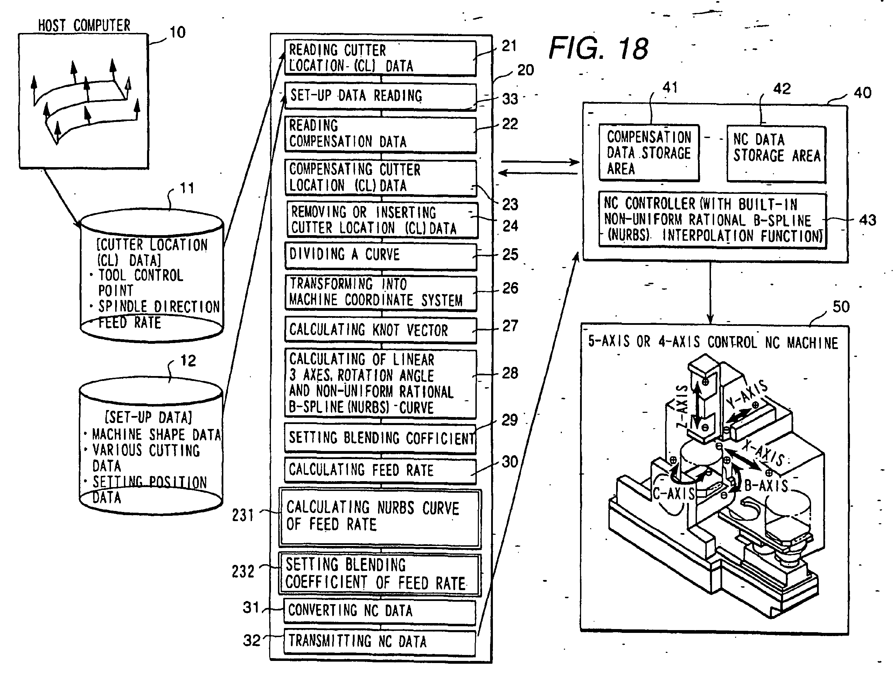

Fig. 18 is a block diagram showing the configuration of another embodiment of the numerically controlled curved surface machining unit according to the invention. This embodiment of the invention is a numerically controlled curved surface machining unit shown in Fig. 1 to which new functions are added. That is to say, new functions of the invention are added to the numerically controlled curved surface machining unit as a means 231 and a means 232.

The curved surface data generated by a host CAM system 10 is divided, within a specified allowance, into a number of lines along a tool path expressed on a workpiece coordinate system. Tool control point vector information and tool axis vector information at individual dividing point, which is generated as above, and feed rate information on a workpiece coordinate system are described in order of the sequence in the tool path so as to generate cutter location (CL) data 11.

The generated CL data 11 is inputted into the computer 20 of the numerically controlled curved surface machining unit 50 so as to convert the data into NC data for operating the NC machine in accordance with the machine configuration of the numerically controlled curved surface machining unit.

With the function in step 21, the numerically controlled curved surface machining unit 50 reads the CL data.

In steps 33 and 22 to 29 with external file 2, in accordance with the mode of the embodiment of the numerically controlled curved surface machining unit shown in Fig. 1, the position vector and NURBS (non-uniform rational B-spline) curve of the three linear axes and a rotation angle, feed rate on a machine coordinate system, and knot vector at the control points on a machine coordinate system are calculated on the basis of the machine configuration of the numerically controlled curved surface machining unit 50

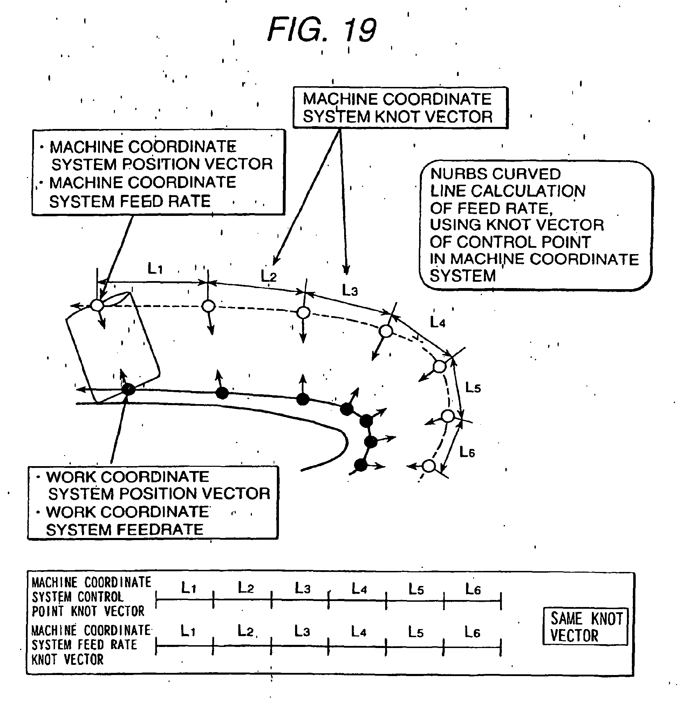

In step 231, a NURBS curve on a machine coordinate system is calculated. The feed rate on a machine coordinate system which is calculated from the above Expression 10 using the position vector on a workpiece coordinate system, feed rate on a workpiece coordinate system, and position vector on a machine coordinate system, generates a NURBS curve expressed by Expressions 1, 2 and 3, using the knot vector (i of the control points of the three linear axes on a machine coordinate system, as shown in Fig. 19, according to a method for generating a NURBS curve shown, for example, in the afore-mentioned "The NURBS Book".

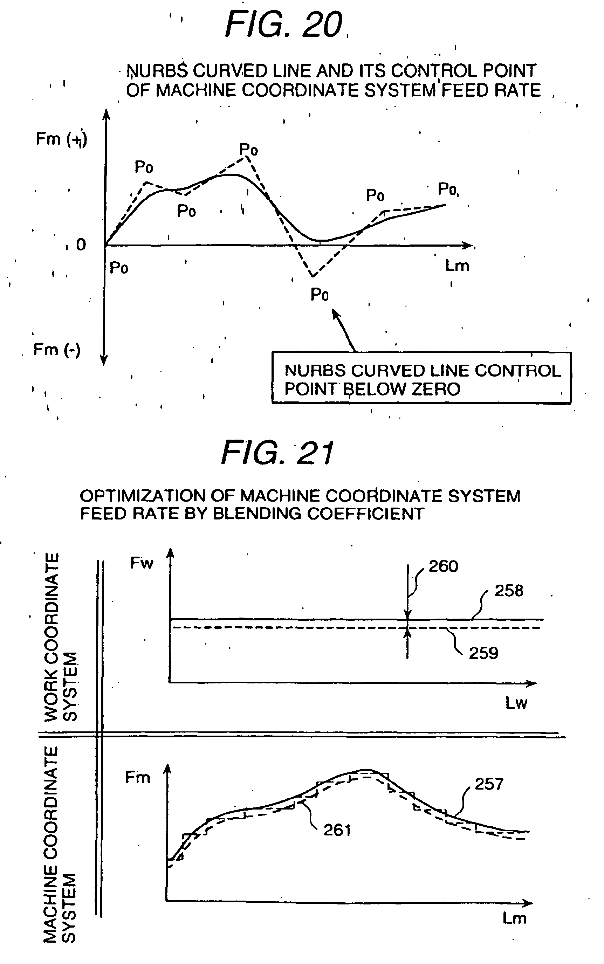

The control point on the NURBS curve of the feed rate on a machine coordinate system generated as above can be less than zero as shown in Fig. 20, dependent on the shape of the NURBS curve.

In step 232, the blending factor of the NURBS curve of the feed rate is calculated. While the NURBS' curve 257 of the feed rate on a machine coordinate system calculated in step 31 is expressed as the actual feed rate on a workpiece coordinate system, as shown in Fig. 21, there arises an excess or insufficiency 260 of the feed rate as a whole when compared to the specified feed rate 259 on a workpiece coordinate system. In order to eliminate this and optimize the curve up to the specified feed rate 259, another NURBS curve 261 of the feed rate on a machine coordinate system is calculated by multiplying the knot vector calculated in step 27 by the blending factor.

In step 31, by substituting the control points on the NURBS curve of the three linear axes on the machine coordinate system calculated in steps 28 to 30 for X, Y and Z of the NURBS interpolation instruction, control points on the NURBS curve of the two rotary axes for B and C, knot vector for K, weights for R, and the control point on the NURBS curve of the feed rate on a machine coordinate system calculated in step 232 for F, data is converted into NC data according to the format of the NURBS interpolation instruction.

In step 32, the last converted NC data is transmitted as NC data from the computer 20, and is read and stored into the NC data storage area 42 of the NC controller 40.

The NC control mechanism 43, equipped with a built-in NURBS interpolation function of the NC controller 40, reads NC data from the NC data storage area 42 and, while analyzing the data, controls a 5-axis or 4-axis control NC machine and achieves NC machining.

In the embodiment, when an output format of NC data is given in the form of a general free curve, it is possible to convert data into NC data and achieve NC machining by interpolating the tool control point vector and machining speed ih the same manner as above, that is, calculating the control points X, Y and Z on the free curve of the three linear axes on a machine coordinate system, control points B and C on the free curve of the two rotary axes, knot vector K, weight R, control point F on the free curve of the feed rate on a machine coordinate system.

According to a mode of the embodiment, cutting tool life can be extended because there is provided a means for determining an optimum actual feed rate and cutting specification on a tool locus moving along a free curve. Besides, since the reduction of average feed rate due to servo mechanism control can be eliminated, it becomes possible to lessen a burden to the numerically controlled curved surface machining unit and achieve curved surface machining with low machined surface roughness and high machined surface accuracy. As a result of the above improvement, hand finishing required as after-process can be eliminated and machining steps can be reduced drastically. It also becomes possible to make a fine adjustment in consideration of possible variation of the feed rate.

**Claims**

1. A numerically controlled curved surface machining unit equipped with three linear axes and, at least, one rotary axis, including a simultaneous multiple-axis control NC machine (50), which is numerically controlled by a numerical control unit (40) (NC controller) with a numerical control NURBS (non-uniform rational B-spline) interpolation function; provided with

a means (20) for reading the tool control point vector (C) data and tool axis vector (D) data, calculated along the tool path on a workpiece coordinate system with defined curved shape by a host computer (10), as cutter location (CL) data and converting the CL data into a position vector of the three linear axes and a rotation angle for the rotary axis on a machine coordinate system so as to operate the simultaneous multiple-axis control NC machine (50) in accordance with the machine configuration of the NC machine (50);

a means (20) for calculating knot vectors of a NURBS curve with the most suitable chord length on the basis of a position vector of the three linear axes and a rotation angle for the rotary axis calculated on a machine coordinate system;

a means (20) for calculating each NURBS curve of the three linear axes and one rotary axis using the knot vectors;

a means (20) for converting the NURBS curve into NURBS interpolation NC data;

a means for converting the feed rate on the workpiece coordinate system into the feed per minute or inverse-time feed on the machine coordinate system; and

a means (20) for transmitting the obtained NC data to the NC controller (40).

2. A numerically controlled curved surface machining unit according to claim 1; provided with a means (20) for removing or inserting CL data along the tool path in accordance with the machining accuracy of the curved surface, upon reading data as CL data.

3. A numerically controlled curved surface machining unit according to claim 1; provided with a means (20) for reading a compensation value based on an individual difference of each tool from the NC controller (40), upon reading data as CL data, and compensating the read CL data in accordance with the tool compensation value.

4. A numerically controlled curved surface machining unit according to claim 1; provided with a means (20) for dividing a NURBS curve based on the curvature or pitch of the CL data plotted along the tool path direction.

5. A numerically controlled curved surface machining unit according to claim 1; provided with a means (20) for calculating a NURBS curve using, as the knot vector, the chord length of the position vector of the three linear axes plotted along the tool path direction on a machine coordinate system.

6. A numerically controlled curved surface machining unit according to claim 1; provided with a means (20) for calculating a NURBS curve using, as the knot vector, the chord length obtained by multiplying with a coefficient each chord length of the position vector of the three linear axes plotted along the tool path direction on a machine coordinate system and the chord length of the tool control point vector (C) on a workpiece coordinate system, and adding up the products.

7. A numerically controlled curved surface machining unit according to claim 1; provided with a means (20) for transforming a curve into NURBS interpolation in case that the position vector of the three linear axes and the rotation angle of the rotary axis calculated on a machine coordinate system are defined by a curve formed by any of B-spline interpolation, Bezier interpolation, Coons interpolation, polynomial, or a combination of a line and an arc.

8. A numerically controlled curved surface machining unit according to claim 1; provided with a means (20) for generating a NURBS curve or multiple NURBS curves with continuous curvature by modifying or inserting a NURBS curve(s) so that the curvature at a break point of multiple NURBS curves continuously changes within a range of machining accuracy.

9. A numerically controlled curved surface machining unit according to claim 1, provided with a means (20)for setting the tool axis vector (D) of CL data to a specific value and converting the data into NURBS interpolation NC data for simultaneous 3-axis control NC machine equipped only with three linear axes.

10. A numerically controlled curved surface machining unit according to claim 1, provided with a means (20) for obtaining the CL data for machining a workpiece along a screw-and-spiral or single-stroke path.

11. A numerically controlled curved surface machining unit according to claim 1, provided with a means for reading linear interpolation NC data for simultaneous multiple-axis machine and converting the data into CL data.

**12.** A numerically controlled curved surface machining unit according to claim 1, provided with a means (20) for specifying the CL data that must be covered by machining without fail.

**13.** A numerically controlled curved surface machining unit equipped with three linear axes and, at least, one rotary axis, including a simultaneous multiple-axis control NC machine (50), which is numerically controlled by a numerical control unit (43) (NC controller) with a numerical control NURBS (non-uniform rational B-spline) interpolation function; provided with
a means for reading a NURBS curve of three linear axes and a rotary axis calculated on a machine coordinate system;
a means (20) for reading cutter location (CL) data calculated on a workpiece coordinate system;
a means for calculating a NURBS curve from the tool control point center position vector of the CL data;
a means for calculating a NURBS curve from the tool axis vector of the CL data;
a means for calculating each sequence-of-point data to a specified machining accuracy from the NURBS curve of three linear axes and a rotary axis on a machine coordinate system;
a means for converting the sequence-of-point data on a machine coordinate system into CL data on a workpiece coordinate system; and
a means for calculating each error between the CL data converted into a workpiece coordinate system and a NURBS curve of the tool control point vector and also a NURBS curve of the tool axis vector calculated on a workpiece coordinate system.

**14.** A numerically controlled curved surface machining unit according to claim 13, provided with a means for modifying the control point or knot vector or weights of the NURBS curve on a machine coordinate system based on the calculation result of the error.

**15.** A numerically controlled curved surface machining unit according to claim 13, provided with a means (20) for reading a tool compensation value from the NC machine and converting the CL data calculated on a workpiece coordinate system in accordance with the compensation value.

**16.** A numerically controlled curved surface machining unit equipped with three linear axes and, at least, one rotary axis, including a simultaneous multiple-axis control NC machine (50), which is numerically controlled by a numerical control unit (40) (NC controller) with a numerical control free curve interpolation function, and a means for calculating NC data for controlling the spindle feed rate; provided with
a means for reading the tool control point vector (C) data and tool axis vector (D) data, calculated along the tool path on a workpiece coordinate system with defined curved shape by a host computer (10), and the feed rate on a workpiece coordinate system as cutter location (CL) data and converting the CL data into a position vector of the three linear axes and a rotation angle for the rotary axis on a machine coordinate system so as to operate the simultaneous multiple-axis control NC machine (50) in accordance with the machine configuration of the NC machine;
a feed rate determining means (20) which, in generating the NC data wherein the position vector and rotation angle on a machine coordinate system are interpolated by a NURBS (non-uniform rational B-spline) curve, determines the feed rate on a machine coordinate system by NURBS curve interpolation, using the knot vector of the NURBS curve;
a means (20) for converting the feed rate on the workpiece coordinate system into the feed per minute or inverse time feed on the machine coordinate system; and a means for transmitting the obtained NC data to the NC controller (40).

**17.** A numerically controlled curved surface machining unit according to claim 16; wherein, when the shape of a curve along which the tool locus is to be interpolated is defined by a free curve including NURBS curve, the feed rate determining means (20) interpolates and calculates the feed rate using a free curve, expressed by the same description as is the tool locus, and parameters thereof.

**18.** A numerically controlled curved surface machining unit according to claims 16 or 17; wherein the feed rate determining means (20) reads the CL data and NC data in which the tool locus is expressed by linear interpolation, and determines the feed rate by NURBS curve interpolation.

**19.** A numerically controlled curved surface machining unit according to claim 18; provided with a means for altering a value of a control point, inserting control points, or removing control points in case that the feed rate of a tool, which is calculated from the CL data by coordinate system transformation in accordance with the machine configuration of the numerically controlled curved surface machining unit, is used as the control points on a curve to be interpolated.

**Patentansprüche**

1. Numerisch gesteuerte Bearbeitungseinheit für gekrümmte Flächen, die mit drei linearen Achsen und mindestens einer Drehachse ausgerüstet ist und eine Mehrachs-Simultansteuerungs-NC-Maschine (50) beinhaltet, die von einer numerischen Steuereinheit (40) (NC-Steuerung) mit Numeriksteuerungs-NURBS (non-uniform rational B-spline) -Interpolationsfunktion numerisch gesteuert wird, aufweisend:

   eine Einrichtung (20) zum Lesen von Daten eines Werkzeugkontrollpunktvektors (C) und Daten eines Werkzeugachsenvektors (D), die in einem Werkstückkoordinatensystem entlang des Werkzeugwegs mit festgelegter Kurvenform von einem Hostcomputer (10) berechnet sind, als Daten eines Schneidorts (CL) und zum Umwandeln der CL-Daten in einen Positionsvektor der drei linearen Achsen und einen Drehwinkel für die Drehachse im Maschinenkoordinatensystem, um die Mehrachs-Simultansteuerungs-NC-Maschine (50) entsprechend ihrer Maschinenkonfiguration zu betreiben,
   eine Einrichtung (20) zum Berechnen von Knotenvektoren einer NURBS-Kurve der am besten geeigneten Sehnenlänge aufgrund eines Positionsvektors der drei linearen Achsen und eines Drehwinkels für die Drehachse, die im Maschinenkoordinatensystem berechnet sind,
   eine Einrichtung (20) zum Berechnen einer jeweiligen NURBS-Kurve der drei linearen Achsen und eines Drehwinkels unter Verwendung der Knotenvektoren,
   eine Einrichtung (20) zum Umwandeln der NURBS-Kurve in NURBS-Interpolations-NC-Daten,
   eine Einrichtung zum Umwandeln der Vorschubgeschwindigkeit im Werkstückkoordinatensystem in Vorschub pro Minute oder zeitinversen Vorschub im Maschinenkoordinatensystem und
   eine Einrichtung (20) zum Übertragen der erhaltenen NC-Daten an die NC-Steuerung (40).

2. Bearbeitungseinheit nach Anspruch 1 mit einer Einrichtung (20) zum Entfernen oder Einfügen von CL-Daten entlang des Werkzeugwegs entsprechend der Bearbeitungsgenauigkeit der gekrümmten Fläche nach dem Lesen von Daten als CL-Daten.

3. Bearbeitungseinheit nach Anspruch 1 mit einer Einrichtung (20) zum Lesen eines Kompensationswerts von der NC-Steuerung (40) aufgrund individueller Unterschiede einzelner Werkzeuge nach dem Lesen von Daten als CL-Daten und zum Kompensieren der gelesenen CL-Daten entsprechend dem Werkzeug-Kompensationswert.

4. Bearbeitungseinheit nach Anspruch 1 mit einer Einrichtung (20) zum Teilen einer NURBS-Kurve aufgrund der Krümmung oder der Schrittweite der in Werkzeugwegrichtung aufgetragenen CL-Daten.

5. Bearbeitungseinheit nach Anspruch 1 mit einer Einrichtung (20) zum Berechnen einer NURBS-Kurve, wobei als Knotenvektor die Sehnenlänge des in Werkzeugwegrichtung aufgetragenen Positionsvektors der drei linearen Achsen im Maschinenkoordinatensystem verwendet wird.

6. Bearbeitungseinheit nach Anspruch 1 mit einer Einrichtung (20) zum Berechnen einer NURBS-Kurve, wobei als Knotenvektor die Sehnenlänge verwendet wird, die durch Multiplizieren der jeweiligen Sehnenlänge des in Werkzeugwegrichtung aufgetragenen Positionsvektors der drei linearen Achsen im Maschinenkoordinatensystem und der Sehnenlänge des Werkzeugkontrollpunktvektors (C) im Werkstückkoordinatensystem mit einem Koeffizienten und durch Addieren der Produkte erhalten wird.

7. Bearbeitungseinheit nach Anspruch 1 mit einer Einrichtung (20) zum Transformieren einer Kurve in eine NURBS-Interpolation falls der Positionsvektor der drei linearen Achsen und der Drehwinkel der Drehachse, die im Maschinenkoordinatensystem berechnet sind, durch eine Kurve bestimmt sind, die von einer B-Spline-Interpolation, einer Bezier-Interpolation, einer Coons-Interpolation, einem Polynom oder einer Kombination einer Linie und eines Bogens gebildet ist.

8. Bearbeitungseinheit nach Anspruch 1 mit einer Einrichtung (20)zum Erzeugen einer NURBS-Kurve oder mehrerer NURBS-Kurven mit zusammenhängender Krümmung durch Modifizieren oder Einfügen einer oder mehrerer NURBS-Kurven, so daß sich der Krümmungsverlauf am Übergangspunkt mehrerer NURBS-Kurven innerhalb eines Bereichs der Bearbeitungsgenauigkeit kontinuierlich ändert.

9. Bearbeitungseinheit nach Anspruch 1 mit einer Einrichtung (20) zum Festlegen des Werkzeugachsenvektors (D) der CL-Daten auf einen bestimmten Wert und zum Umwandeln der Daten in NURBS-Interpolations-NC-Daten für eine Dreiachsen-Simultansteuerungs-NC-Maschine, die lediglich mit drei linearen Achsen ausgerüstet ist.

**10.** Bearbeitungseinheit nach Anspruch 1 mit einer Einrichtung (20) zum Gewinnen der CL-Daten zum Bearbeiten eines Werkstücks entlang eines Schraub- und Spiralwegs oder eines Einfachhubwegs.

**11.** Bearbeitungseinheit nach Anspruch 1 mit einer Einrichtung zum Lesen von Linearinterpolations-NC-Daten für eine Mehrachs-Simultanmaschine und zum Umwandeln der Daten in CL-Daten.

**12.** Bearbeitungseinheit nach Anspruch 1 mit einer Einrichtung (20) zum Bezeichnen der CL-Daten, die unbedingt von der Bearbeitung abgedeckt werden müssen.

**13.** Numerisch gesteuerte Bearbeitungseinheit für gekrümmte Flächen, die mit drei linearen Achsen und mindestens einer Drehachse ausgerüstet ist und eine Mehrachs-Simultansteuerungs-NC-Maschine (50) beinhaltet, die von einer numerischen Steuereinheit (43) (NC-Steuerung) mit Numeriksteuerungs-NURBS (non-uniform rational B-spline) -Interpolationsfunktion numerisch gesteuert wird, aufweisend:

eine Einrichtung zum Lesen einer NURBS-Kurve für drei lineare Achsen und eine Drehachse, die in einem Maschinenkoordinatensystem berechnet ist,
eine Einrichtung (20) zum Lesen von Daten eines Schneidorts (CL), die in einem Werkzeugkoordinatensystem berechnet sind,
eine Einrichtung zum Berechnen einer NURBS-Kurve aus dem Werkzeugkontrollpunkt-Mittelpositionsvektor der CL-Daten,
eine Einrichtung zum Berechnen einer NURBS-Kurve aus dem Werkzeugachsenvektor der CL-Daten,
eine Einrichtung zum Berechnen jeweiliger Punktabfolgedaten bis zu einer festgelegten Bearbeitungsgenauigkeit aus der NURBS-Kurve der drei linearen Achsen und der Drehachse im Maschinenkoordinatensystem,
eine Einrichtung zum Umwandeln der Punktabfolgedaten im Maschinenkoordinatensystem in CL-Daten im Werkstückkorodinatensystem, und
eine Einrichtung zum Berechnen des jeweiligen Fehlers zwischen den in das Werkstückkoordinatensystem umgewandelten CL-Daten und einer NURBS-Kurve des Werkzeugkontrollpunktvektors sowie einer NURBS-Kurve des Werkzeugachsenvektors, die im Werkstückkoordinatensystem berechnet sind.

**14.** Bearbeitungseinheit nach Anspruch 13 mit einer Einrichtung zum Modifizieren eines Kontrollpunkts oder Knotenvektors oder Gewichts der NURBS-Kurve im Maschinenkoordinatensystem aufgrund des Ergebnisses der Fehlerberechnung.

**15.** Bearbeitungseinheit nach Anspruch 13 mit einer Einrichtung (20) zum Lesen eines Werkzeugkompensationswerts aus der NC-Maschine und zum Umwandeln der im Werkstückkoordinatensystem berechneten CL-Daten entsprechend dem Kompensationswert.

**16.** Numerisch gesteuerte Bearbeitungseinheit für gekrümmte Flächen, die mit drei linearen Achsen und mindestens einer Drehachse ausgerüstet ist und eine Mehrachs-Simultansteuerungs-NC-Maschine (50) beinhaltet, die von einer numerischen Steuereinheit (40) (NC-Steuerung) mit Numeriksteuerungs-Freikurven-Interpolationsfunktion und einer Einrichtung zum Berechnen von NC-Daten zum Steuern der Spindelvorschubgeschwindigkeit numerisch gesteuert wird, aufweisend:

eine Einrichtung zum Lesen von Daten eines Werkzeugkontrollpunktvektors (C) und Daten eines Werkzeugachsenvektors (D), die im Werkstückkoordinatensystem entlang des Werkzeugwegs mit festgelegter Kurvenform von einem Hostcomputer (10) berechnet sind, und der Vorschubgeschwindigkeit im Werkstückkoordinatensystem als Daten eines Schneidorts (CL) und zum Umwandeln der CL-Daten in einen Positionsvektor der drei linearen Achsen und einen Drehwinkel für die Drehachse im Maschinenkoordinatensystem, um die Mehrachs-Simultansteuerungs-NC-Maschine (50) entsprechend ihrer Maschinenkonfiguration zu betreiben,
eine Vorschubgeschwindigkeits-Bestimmungseinrichtung (20), die bei der Erzeugung der NC-Daten, bei der der Positionsvektor und der Drehwinkel im Maschinenkoordinatensystem von einer NURBS-Kurve (non-uniform rational B-spline) interpoliert wird, die Vorschubgeschwindigkeit im Maschinenkoordinatensystem unter Verwendung des Knotenvektors der NURBS-Kurve mittels einer NURBS-Kurveninterpolation bestimmt,
eine Einrichtung (20) zum Umwandeln der Vorschubgeschwindigkeit im Werkstückkoordinatensystem in den Vorschub pro Minute oder den zeitinversen Vorschub im Maschinenkoordinatensystem, und
eine Einrichtung zum Übertragen der erhaltenen NC-Daten an die NC-Steuerung (40).

**17.** Bearbeitungseinheit nach Anspruch 16, wobei dann, wenn die Form einer Kurve, entlang der der Werkzeugort interpoliert werden soll, von einer freien Kurve einschließlich einer NURBS-Kurve festgelegt ist, die Vorschubgeschwindigkeits-Bestimmungseinrichtung (20) die Vorschubgeschwindigkeit unter Verwendung einer freien Kurve, die von der gleichen Beschreibung wie der des Werkzeugorts ausgedrückt wird, und ihren Parametern interpoliert und berechnet.

18. Bearbeitungseinheit nach Anspruch 16 oder 17, wobei die Vorschubgeschwindigkeits-Bestimmungseinrichtung (20) die CL-Daten und die NC-Daten, in denen der Werkzeugort durch lineare Interpolation ausgedrückt ist, liest und die Vorschubgeschwindigkeit durch NURBS-Kurveninterpolation bestimmt.

19. Bearbeitungseinheit nach Anspruch 18 mit einer Einrichtung zum Ändern des Werts eines Kontrollpunkts, zum Einfügen von Kontrollpunkten oder zum Entfernen von Kontrollpunkten, falls die Vorschubgeschwindigkeit eines Werkzeugs, die aus den CL-Daten durch Koordinatentransformation entsprechend der Maschinenkonfiguration der numerisch gesteuerten Bearbeitungseinheit für gekrümmte Flächen berechnet ist, auf einer zu interpolierenden Kurve als Kontrollpunkte verwendet wird.

## Revendications

1. Unité d'usinage de surface incurvée numériquement commandée équipée de trois axes linéaires et, au moins, d'un axe de rotation, incluant une machine NC de commande simultanée de multiples axes (50), qui est numériquement commandée par une unité de commande numérique (40) (commande NC) à l'aide d'une fonction d'interpolation B-spline rationnelle non-uniforme (NURBS) de commande numérique, munie de
moyens (20) pour lire les données de vecteur de point de commande d'outil (C) et les données de vecteur d'axe d'outil (D), calculées le long du trajet d'outil sur un système de coordonnées de pièce à usiner ayant une forme incurvée définie par un ordinateur hôte (10), en tant que données (CL) de localisation d'outil de coupe et pour convertir les données CL en un vecteur de position des trois axes linéaires et un angle de rotation de l'axe de rotation sur un système de coordonnées-machine de manière à faire fonctionner la machine NC de commande simultanée de multiples axes (50) conformément à la configuration machine de la machine NC (50),
moyens (20) pour calculer des vecteurs de noeud d'une courbe NURBS ayant la longueur de corde la plus adaptée sur la base d'un vecteur de position des trois axes linéaires et d'un angle de rotation de l'axe de rotation calculés sur un système de coordonnées-machine,
moyens (20) pour calculer chaque courbe NURBS des trois axes linéaires et un axe de rotation en utilisant les vecteurs de noeud,
moyens (20) pour convertir la courbe NURBS en données NC d'interpolation NURBS,
moyens pour convertir la vitesse d'avance sur le système de coordonnées de pièce à usiner en avance par minute ou en avance de temporisation sur le système de coordonnées-machine, et
moyens (20) pour transmettre les données NC obtenues à la commande NC (40).

2. Unité d'usinage de surface incurvée numériquement commandée selon la revendication 1, munie de moyens (20) pour retirer ou insérer des données CL le long du trajet d'outil conformément à la précision d'usinage de la surface incurvée, lors de la lecture de données telles que des données CL.

3. Unité d'usinage de surface incurvée numériquement commandée selon la revendication 1, munie de moyens (20) pour lire une valeur de compensation sur la base d'une différence individuelle de chaque outil à partir de la commande NC (40), lors de la lecture de données telles que des données CL, et compenser les données CL lues conformément à la valeur de compensation d'outil.

4. Unité d'usinage de surface incurvée numériquement commandée selon la revendication 1, munie de moyens (20) pour diviser une courbe NURBS sur la base de la courbure ou du pas des données CL tracées le long de la direction de trajet d'outil.

5. Unité d'usinage de surface incurvée numériquement commandée selon la revendication 1, munie de moyens (20) pour calculer une courbe NURBS en utilisant, en tant que vecteur de noeud, la longueur de corde du vecteur de position des trois axes linéaires tracés le long de la direction de trajet d'outil sur un système de coordonnées-machine.

6. Unité d'usinage de surface incurvée numériquement commandée selon la revendication 1, munie de moyens (20) pour calculer une courbe NURBS en utilisant, en tant que vecteur de noeud, la longueur de corde obtenue en multipliant par un coefficient chaque longueur de corde du vecteur de position des trois axes linéaires tracés le long de la direction de trajet d'outil sur un système de coordonnées-machine et la longueur de corde du vecteur de point de commande d'outil (C) sur un système de coordonnées de pièce à usiner, et en additionnant les produits.

7. Unité d'usinage de surface incurvée numériquement commandée selon la revendication 1, munie de moyens (20) pour transformer une courbe en une interpolation NURBS dans le cas où le vecteur de position des trois axes linéaires et l'angle de rotation de l'axe de rotation calculés sur un système de coordonnées-machine sont définis par une courbe formée par l'un quelconque parmi une interpolation B-spline, une interpolation de Bezier, une interpolation de Coons, un polynôme, ou une combinaison d'une ligne et d'un arc.

8. Unité d'usinage de surface incurvée numériquement commandée selon la revendication 1, munie de moyens (20) pour générer une courbe NURBS ou de multiples courbes NURBS ayant une courbure continue en modifiant ou en insérant une ou des courbes NURBS de sorte que la courbure en un point de rupture de multiples courbes NURBS change en continu dans une plage de précision d'usinage.

9. Unité d'usinage de surface incurvée numériquement commandée selon la revendication 1, munie de moyens (20) pour établir le vecteur d'axe d'outil (D) de données CL à une valeur spécifique et convertir les données en données NC d'interpolation NURBS pour une machine NC de commande simultanée de 3 axes équipée seulement de trois axes linéaires.

10. Unité d'usinage de surface incurvée numériquement commandée selon la revendication 1, munie de moyens (20) pour obtenir les données CL pour usiner une pièce à usiner le long d'un trajet à vis-et-hélice ou à une seul course.

11. Unité d'usinage de surface incurvée numériquement commandée selon la revendication 1, munie de moyens pour lire des données NC d'interpolation linéaire pour une machine à commande simultanée de multiples axes et convertir les données en données CL.

12. Unité d'usinage de surface incurvée numériquement commandée selon la revendication 1, munie de moyens (20) pour spécifier les données CL qui doivent être couvertes par un usinage sans anomalie.

13. Unité d'usinage de surface incurvée numériquement commandée équipée de trois axes linéaires et, au moins, d'un axe de rotation, incluant une machine NC de commande simultanée de multiples axes (50), qui est numériquement commandée par une unité de commande numérique (43) (commande NC) à l'aide d'une fonction d'interpolation NURBS (B-spline rationnelle non-uniforme) de commande numérique, comportant :

   des moyens pour lire une courbe NURBS de trois axes linéaires et un axe de rotation calculés sur un système de coordonnées-machine,
   des moyens (20) pour lire des données (CL) d'emplacement d'outil de coupe calculées sur un système de coordonnées de pièce à usiner,
   des moyens pour calculer une courbe NURBS à partir du vecteur de position de centre de point de commande d'outil des données CL,
   des moyens pour calculer une courbe NURBS à partir du vecteur d'axe d'outil des données CL,
   des moyens pour calculer chaque donnée de séquence-de-points avec une précision d'usinage spécifiée à partir de la courbe NURBS de trois axes linéaires et d'un axe de rotation sur un système de coordonnées-machine,
   des moyens pour convertir les données de séquence-de-points sur un système de coordonnées-machine en données CL sur un système de coordonnées de pièce à usiner, et
   des moyens pour calculer chaque erreur entre les données CL converties dans un système de coordonnées de pièce à usiner et une courbe NURBS du vecteur de point de commande d'outil et également une courbe NURBS du vecteur d'axe d'outil calculées sur un système de coordonnées de pièce à usiner.

14. Unité d'usinage de surface incurvée numériquement commandée selon la revendication 13, munie de moyens pour modifier le point de commande ou le vecteur de noeud ou les poids de la courbe NURBS sur un système de coordonnées-machine sur la base du résultat du calcul de l'erreur.

15. Unité d'usinage de surface incurvée numériquement commandée selon la revendication 13, munie de moyens (20) pour lire une valeur de compensation d'outil à partir de la machine NC et convertir les données CL calculées sur un système de coordonnées de pièce à usiner conformément à la valeur de compensation.

**16.** Unité d'usinage de surface incurvée numériquement commandée équipée de trois axes linéaires et, au moins, d'un axe de rotation, incluant une machine NC de commande simultanée de multiples axes (50), qui est numériquement commandée par une unité de commande numérique (40) (commande NC) à l'aide d'une fonction d'interpolation de courbe sans commande numérique, et de moyens pour calculer des données NC pour commander la vitesse d'avance de broche, comportant :

des moyens (20) pour lire les données de vecteur de point de commande d'outil (C) et les données de vecteur d'axe d'outil (D), calculées le long du trajet d'outil sur un système de coordonnées de pièce à usiner ayant une forme incurvée définie par un ordinateur hôte (10), et la vitesse d'avance sur un système de coordonnées de pièce à usiner sous la forme de données (CL) de localisation d'outil de coupe et convertir les données CL en un vecteur de position des trois axes linéaires et un angle de rotation de l'axe de rotation sur un système de coordonnées-machine de manière à faire fonctionner la machine NC de commande simultanée de multiples axes (50) conformément à la configuration machine de la machine NC,
des moyens de détermination de vitesse d'avance (20) qui, dans la génération des données NC dans lesquelles le vecteur de position et l'angle de rotation sur un système de coordonnées-machine sont interpolés par une courbe B-spline rationnelle non-uniforme (NURBS), déterminent la vitesse d'avance sur un système de coordonnées-machine par une interpolation de courbe NURBS, en utilisant le vecteur de noeud de la courbe NURBS,
des moyens (20) pour convertir la vitesse d'avance sur un système de coordonnées de pièce à usiner en avance par minute ou avance de temporisation sur le système de coordonnées-machine, et des moyens pour transmettre les données NC obtenues à la commande NC (40).

**17.** Unité d'usinage de surface incurvée numériquement commandée selon la revendication 16, dans laquelle, lorsque la forme d'une courbe le long de laquelle le lieu géométrique de l'outil doit être interpolé est définie par une courbe libre incluant une courbe NURBS, les moyens de détermination de vitesse d'avance (20) interpolent et calculent la vitesse d'avance en utilisant une courbe libre, exprimée par la même description que le lieu géométrique de l'outil, et les paramètres de celle-ci.

**18.** Unité d'usinage de surface incurvée numériquement commandée selon les revendications 16 ou 17, dans laquelle les moyens de détermination de vitesse d'avance (20) lisent les données CL et les données NC dans lesquelles le lieu géométrique de l'outil est exprimé par interpolation linéaire, et déterminent la vitesse d'avance par une interpolation de courbe NURBS.

**19.** Unité d'usinage de surface incurvée numériquement commandée selon la revendication 18, munie de moyens pour modifier une valeur d'un point de commande, insérer des points de commande, ou supprimer des points de commande dans le cas où la vitesse d'avance d'un outil, qui est calculée à partir des données CL par une transformation de système de coordonnées conformément à la configuration-machine de l'unité d'usinage de surface incurvée numériquement commandée, est utilisée en tant que points de commande sur une courbe à interpoler.

FIG. 1

HOST COMPUTER 10

[CUTTER LOCATION (CL) DATA]
· TOOL CONTROL POINT
· SPINDLE DIRECTION 11

[SET-UP DATA]
· MACHINE SHAPE DATA
· VARIOUS CUTTING DATA
· SETTING POSITION DATA 12

21
20

| READING CUTTER LOCATION (CL) DATA |
| SET-UP DATA READING |
| READING COMPENSATION DATA |
| COMPENSATING CUTTER LOCATION (CL) DATA |
| REMOVING OR INSERTING CUTTER LOCATION (CL) DATA |
| DIVIDING A CURVE |
| TRANSFORMING INTO MACHINE COORDINATE SYSTEM |
| CALCULATING KNOT VECTOR |
| CALCULATING OF LINEAR 3 AXES, ROTATION ANGLE AND NON-UNIFORM RATIONAL B-SPLINE (NURBS) CURVE |
| SETTING BLENDING COFFICIENT |
| CALCULATING FEED RATE |
| CONVERTING NC DATA |
| TRANSMITTING NC DATA |

33
22
23
24
25
26
27
28
29
30
31
32

COMPENSATION NO →
← COMPENSATION DATA

41     42     40

| COMPENSATION DATA STORAGE AREA | NC-DATA STORAGE AREA |

NC CONTROLLER (WITH BUILT-IN NON-UNIFORM RATIONAL B-SPLINE (NURBS) INTERPOLATION FUNCTION) 43

50

5-AXIS OR 4-AXIS CONTROL NC MACHINE

Z-AXIS   Y-AXIS   X-AXIS   C-AXIS   B-AXIS

EP 1 235 126 B1

# FIG. 2

[PRIOR ART] LINEAR INTERPOLATION MACHINING

(a)

(b)

FEED RATE ( m/min )

SPECIFIED FEED RATE ( 18m/min )

AVERAGE FEED RATE

NURBS INTERPOLATION MACHINING

(c)

(d)

FEED RATE ( m/min )

*FIG. 3*

$P_1$

$P_2$

$P_{n-1}$

$P_n$

$P_0$

NURBS CURVE

*FIG. 4*

$C_1$

$C_2$

$C_3$

ID

N

C

P

## FIG. 5

TOOL AXIS VECTOR

51

52

FIRST, POINTS ON TOOL CONTROL POINT LOCUS ARE REMOVED BY COORDINATE VALUES

REFLECTION OF COORDINATES ( X,Y,Z )

CURVED SURFACE

RANGE OF TOLERANCE

ACCEPTED PASS POINT

53

$\theta$

54

NEXT, PASS POINTS ARE ADDED TAKING INTO ACCOUNT VARIATION OF VECTOR ANGLE

REFLECTION OF VECTOR ( i, j,k )

CURVED SURFACE

INSERTED PASS POINT

*BOTH ( X,Y,Z) AND ( i,j,k ) DATA SHALL BE CONVERTED INTO NURBS DATA

EP 1 235 126 B1

## FIG. 6

62

PATH SEPARATION
POSITION IS DETERMINED
ON THE BASIS OF CHORD
LENGTH BETWEEN PASS
POINTS AND ANGLES
FORMED BY TWO LINES

63

PATH SEPARATION
POSITION

64

G06.2 TOOL PATH

NURBS
CONTROL
POINTS

65

G01 TOOL PATH

61

TOOL CONTROL
POINT LOCUS IS
TO BE CHECKED

## FIG. 7

X

Ow

Y

Z

Z

S

Om

X

Y

# FIG. 8

(a)

NEXT,FIND NURBS ON MACHINE COORDINATE — 82

FIRST,FIND THE MACHINE COORDINATE ( Mx,My,Mz,B,C ) OF A PASS POINT — 81

CURVED SURFACE

PASS POINTS ON TOOL CONTROL POINT LOCUS

* BOTH ( Mx,My,Mz ) AND ( B,C ) DATA SHALL BE CONVERTED INTO NURBS DATA

(b)

( Mx,My,Mz ) KNOT VECTOR

| L1 | L2 | L3 | L4 | L5 | L6 |

( B,C ) KNOT VECTOR

| L1 | L2 | L3 | L4 | L5 | L6 |

## FIG. 9 ( a )

HOW TO CONTROL
THIS BULGE ?

91

## FIG. 9 ( b )

CHORD LENGTH RATIO L 1
ON MACHINE COORDINATE

L1

L2

CHORD LENGTH
RATIO L2 ON TOOL
CONTROL POINT
LOCUS

K= ( L1x3+L 2 )/4
IS USED AS
BLENDING
RATIO OF KNOT

REMOVE
POINTS

FIND THE CHORD LENGTH RATIO
OF L2 INCLUDING SEQUENCE OF
REMOVED POINTS

92

FIG. 10 ( a )

101

FIG. 10 ( b )

R

FIG. 11 ( a )

FIG. 11 ( b )

# FIG. 12 ( a )

# FIG. 12 ( b )

## FIG. 13 ( a )

## FIG. 13 ( b )

## FIG. 14 ( a )

Q1     Q2

Q0

Q3

T = [ 0 0 0 0 1 1 1 1 ]

## FIG. 14 ( b )

Q1     Q2

Q0

Q3

T = [ -3 -2 -1 -0 1 2 3 4 ]

## FIG. 14 ( c )

QC1     QC0

QB1     QB2

QB0 = QC0     QB1 = QC1

## FIG. 15

## FIG. 16

# FIG. 17

N'2

N1

N2

N3

N4 $\left(\begin{array}{c}W4=1.0 \\ \downarrow \\ \overline{W}4=2.0\end{array}\right)$

N5

N6

0    1.0   1.5        2.75   3.5            4.5

0    1.0            2.0   2.75   3.5      4.5    } KNOT VECTOR

FIG. 18

HOST COMPUTER — 10

[CUTTER LOCATION (CL) DATA] — 11
- TOOL CONTROL POINT
- SPINDLE DIRECTION
- FEED RATE

[SET-UP DATA] — 12
- MACHINE SHAPE DATA
- VARIOUS CUTTING DATA
- SETTING POSITION DATA

20

READING CUTTER LOCATION (CL) DATA — 21

SET-UP DATA READING — 33

READING COMPENSATION DATA — 22

COMPENSATING CUTTER LOCATION (CL) DATA — 23

REMOVING OR INSERTING CUTTER LOCATION (CL) DATA — 24

DIVIDING A CURVE — 25

TRANSFORMING INTO MACHINE COORDINATE SYSTEM — 26

CALCULATING KNOT VECTOR — 27

CALCULATING OF LINEAR 3 AXES, ROTATION ANGLE AND NON-UNIFORM RATIONAL B-SPLINE (NURBS) CURVE — 28

SETTING BLENDING COFFICIENT — 29

CALCULATING FEED RATE — 30

CALCULATING NURBS CURVE OF FEED RATE — 231

SETTING BLENDING COEFFICIENT OF FEED RATE — 232

CONVERTING NC DATA — 31

TRANSMITTING NC DATA — 32

41   42   40

COMPENSATION DATA STORAGE AREA

NC DATA STORAGE AREA

NC CONTROLLER (WITH BUILT-IN NON-UNIFORM RATIONAL B-SPLINE (NURBS) INTERPOLATION FUNCTION) — 43

5-AXIS OR 4-AXIS CONTROL NC MACHINE — 50

Z-AXIS   Y-AXIS   X-AXIS   C-AXIS   B-AXIS

EP 1 235 126 B1

34

# FIG. 19

MACHINE COORDINATE
SYSTEM KNOT VECTOR

· MACHINE COORDINATE
SYSTEM POSITION VECTOR
· MACHINE COORDINATE
SYSTEM FEED RATE

NURBS CURVED
LINE CALCULATION
OF FEED RATE,
USING KNOT VECTOR
OF CONTROL POINT
IN MACHINE COORDINATE
SYSTEM

L1  L2  L3  L4  L5  L6

· WORK COORDINATE
SYSTEM POSITION VECTOR
· WORK COORDINATE
SYSTEM FEEDRATE

| MACHINE COORDINATE SYSTEM CONTROL POINT KNOT VECTOR | L1 | L2 | L3 | L4 | L5 | L6 | SAME KNOT VECTOR |
|---|---|---|---|---|---|---|---|
| MACHINE COORDINATE SYSTEM FEED RATE KNOT VECTOR | L1 | L2 | L3 | L4 | L5 | L6 | |

# FIG. 20.

NURBS CURVED LINE AND ITS CONTROL POINT
OF MACHINE COORDINATE SYSTEM FEED RATE

NURBS CURVED LINE CONTROL
POINT BELOW ZERO

# FIG. 21

OPTIMIZATION OF MACHINE COORDINATE SYSTEM
FEED RATE BY BLENDING COEFFICIENT